# EUROPEAN PATENT SPECIFICATION

(11) **EP 3 683 061 B1**
(45) Date of publication and mention of the grant of the patent: **25.12.2024**
(21) Application number: 18856335.7
(22) Date of filing: 23.08.2018
(51) Int. Cl.: B41J 2/01, B41F 23/08, B41M 5/00, B41M 7/02, C09D 11/54, B41J 11/00, B41J 29/17

(54) **PRINTING APPARATUS, PRINTING METHOD, VARNISH INFORMATION OUTPUT METHOD, AND RECODING MEDIUM INFORMATION OUTPUT METHOD**
DRUCKVORRICHTUNG, DRUCKVERFAHREN, LACKINFORMATIONSAUSGABEVERFAHREN UND AUFZEICHNUNGSMEDIUMINFORMATIONSAUSGABEVERFAHREN
APPAREIL D'IMPRESSION, PROCÉDÉ D'IMPRESSION, PROCÉDÉ DE DÉLIVRANCE D'INFORMATIONS DE VERNIS ET PROCÉDÉ DE DÉLIVRANCE D'INFORMATIONS DE SUPPORT D'ENREGISTREMENT

(30) Priority: 13.09.2017 JP 2017175768
(43) Date of publication of application: 22.07.2020
(73) Proprietor: FUJIFILM Corporation, Tokyo 106-8620 (JP)
(72) Inventor: HOUJOU, Hiroaki, Ashigarakami-gun Kanagawa 258-8577 (JP)
(74) Representative: Klunker IP Patentanwälte PartG mbB
(86) International application number: PCT/JP2018/031171
(87) International publication number: WO 2019/054150

(56) References cited:
- EP-A1- 3 050 930
- EP-A1- 3 275 674
- JP-A- 2003 047 897
- JP-A- 2016 107 419
- JP-A- 2016 107 419
- JP-A- 2018 015 944
- US-A1- 2007 120 923
- US-A1- 2007 120 923
- US-B2- 9 321 921

## Description

### BACKGROUND OF THE INVENTION

### 1. Field of the Invention

The present invention relates to a printing device, a printing method, a varnish information output method, and a recording medium information output method, and particularly relates to a printing device which applies a varnish to a surface of a recording medium after printing, a printing method, a varnish information output method, and a recording medium information output method.

### 2. Description of the Related Art

Varnish coating has been known as a surface process of a printed material. The varnish coating is a technology of coating an image surface of a printed material using a varnish. The varnish coating is, for example, performed in order to give feeling of high quality to a printed material by applying gloss to a surface of an image, or improve at least any one of rub resistance or chemical resistance of the image surface.

JP2007-111873A discloses a technology of reliably performing drying of a varnish-coated surface at an optimal temperature in an aqueous varnish drying device of a printer and the printer.

JP2003-047897A discloses a technology of decreasing an amount of a coater solution remaining on a surface of a coater chamber regarding operation control of a coater for transmitting and applying the coater solution to a sheet.

JP2016-107419A discloses a technology of obtaining information whether or not an image surface is varnish-coated and determining a dry strength in a case of drying ink, based on the obtained information.
EP 3 050 930 A1 discloses an image forming method and an ink set, and this document specifically discloses a contact angle of 70° or more. This prior art document is related to a starting point of the present invention.
US 9 321 921 B2 discloses an image forming method and a post-treatment liquid for an inkjet printing device. This document does not disclose to add a processing liquid with a specific contact angle.

### SUMMARY OF THE INVENTION

In the technology disclosed in JP2016-107419A, by applying a processing liquid having a function of aggregating ink to a printing surface of a sheet and printing an image on the sheet, on which the processing liquid is dried, by an ink jet system, it is possible to print a high-quality image, even in a case where general-purpose printing paper is used. As described above, in a case where the processing liquid having a function of aggregating ink is applied to paper, in order to ensure image quality with aqueous ink, acid exists on a surface of the paper.

Meanwhile, a varnish is applied by transferring the varnish from an anilox roller to a varnish plate and further transferring the varnish from the varnish plate to paper, but in a boundary between a varnish coating region and a non-coating region, the drying of the varnish proceeds from the time when the varnish is supplied from the anilox roller to the varnish plate till the varnish is transferred to the paper, and the varnish is in a solidified and precipitated state. In a case where the varnish plate in a solidified and precipitated state comes in contact with the paper having a surface on which acid exists, an aggregation reaction may occur, and a solidified and precipitated material may largely grow.

However, in JP2016-107419A, such a problem is not recognized.

The invention is made in view of such circumstances, and an object of the invention is to provide a printing device which prevents a coating abnormality of a varnish, a printing method, a varnish information output method, and a recording medium information output method.

According to one aspect of a printing device for achieving the object described above, there is provided a printing device comprising the features of claim 1.

According to this aspect, the processing liquid having a contact angle with the recording surface of the recording medium equal to or greater than 70° is added to the recording surface, the ink is applied to the recording surface, to which the processing liquid is added, from the inkjet head to record an image, and the varnish having the coating forming time of 9 minutes or longer is transferred and applied to the recording surface, and accordingly, it is possible to prevent the coating abnormality of the varnish.

An anti-drying agent may be added to the varnish. Therefore, it is possible to suitably adjust the coating forming time of the varnish to 9 minutes or longer.

The coating forming time of the varnish may be 12 minutes or longer. Therefore, it is possible to ensure robustness to prevent the coating abnormality of the varnish.

The processing liquid adding unit preferably adds the processing liquid by an addition amount of 2.0 grams per square meter or less. By suitably adjusting the coating amount of the processing liquid, it is possible to prevent the coating abnormality of the varnish.

The varnish coating unit preferably applies the varnish by an addition amount of 3.5 grams per square meter or more. By suitably adjusting the coating amount of the varnish, it is possible to prevent the coating abnormality of the varnish.

The image recording unit preferably applies a clear ink not containing a coloring material component in a region other than a region to which a colored ink containing a coloring material component is applied. By consuming acid of the processing liquid in the region to which the colored ink is not applied, by the clear ink, it is possible to prevent the coating abnormality of the varnish.

In addition, the amounts of aggregating components in the colored ink and the clear ink are preferably equal to each other. By setting the amounts of the aggregating components to be equivalent to each other, it is possible to prevent the coating abnormality of the varnish.

The varnish coating unit may include a cleaning unit which comes into contact with the varnish plate to clean the varnish plate, in a position between a position where the varnish held in the varnish plate is transferred and applied to the recording surface and a position where a new varnish is transferred to the varnish plate from the anilox roller. By cleaning the varnish plate in this position, is possible to prevent the coating abnormality of the varnish.

Further preferred embodiments are defined by the dependent claims.

According to claim 9, the contact angle between the processing liquid and the recording medium to be used in the printing device is obtained, and the information of the varnish having the coating forming time of 9 minutes or longer is output, in a case where the obtained contact angle is equal to or greater than 70°, and therefore, it is possible to prevent the coating abnormality of the varnish by using the output varnish.

According to claim 10, the coating forming time of the varnish to be used in the printing device is obtained, and the information of the recording medium having the contact angle with the processing liquid smaller than 70°, in a case where the obtained coating forming time is shorter than 9 minutes, is output, and therefore, it is possible to prevent the coating abnormality of the varnish by using the output paper.

According to one aspect of a printing method for achieving the object described above, there is provided a printing method comprising the steps of claim 11.:.

According to this aspect, the processing liquid having a contact angle with the recording surface of the recording medium equal to or greater than 70° is added to the recording surface, the ink is applied to the recording surface, to which the processing liquid is added, from the inkjet head to record an image, and the varnish having the coating forming time of 9 minutes or longer is transferred and applied to the recording surface, and accordingly, it is possible to prevent the coating abnormality of the varnish.

Further, there is provided a varnish information output method defined by claim 12.

According to this aspect, the information of the recording medium to be used in the printing device and the information of the processing liquid are obtained, the contact angle of the processing liquid with the recording medium is obtained, and the information of the varnish having the coating forming time of 9 minutes or longer is output, in a case where the obtained contact angle is equal to or greater than 70°, and therefore, it is possible to prevent the coating abnormality of the varnish.

According to one aspect of a recording medium information output method for achieving the object described above, there is provided a recording medium information output method defined by claim 13.

According to this aspect, the information of the processing liquid and the information of the varnish to be used in the printing device are obtained, the coating forming time of the obtained varnish is obtained, the recording medium having a contact angle with the processing liquid to be used smaller than 70° is selected, in a case where the obtained coating forming time is shorter than 9 minutes, the recording medium is selected in advance, in a case where the obtained coating forming time is 9 minutes or longer, the information of the selected recording medium is output, and therefore, it is possible to prevent the coating abnormality of the varnish.

According to the invention, it is possible to prevent the coating abnormality of the varnish.

### BRIEF DESCRIPTION OF THE DRAWINGS

Fig. 1 is an overall configuration view of an ink jet printing device.
Fig. 2 is a development view of an arrow A of Fig. 1.
Fig. 3 is another development view of the arrow A of Fig. 1.
Fig. 4 is still another development view of the arrow A of Fig. 1.
Fig. 5 is a flowchart showing a process of a measurement method of a coating forming time of a varnish.
Fig. 6 is a table showing results obtained by evaluating occurrence levels of a front edge coating abnormality.
Fig. 7 is a table showing results obtained by evaluating occurrence levels of the front edge coating abnormality, in a case where an anti-drying agent is added to the varnish.
Fig. 8 is a table showing results obtained by evaluating occurrence levels of the front edge coating abnormality, in a case where a clear ink is applied to a non-image area.
Fig. 9 is a table showing results obtained by evaluating occurrence levels of the front edge coating abnormality, in a case where a cleaning mechanism of cleaning a varnish plate is provided.
Fig. 10 is a block diagram of a selection device.
Fig. 11 is a flowchart showing a process of a varnish information output method.
Fig. 12 is a flowchart showing a process of a recording medium information output method.

### DESCRIPTION OF THE PREFERRED EMBODIMENTS

Hereinafter, preferable embodiments of the invention will be described with reference to accompanying drawings. In this specification, the same reference numerals are used for the same constituent elements, and the repeated description will be omitted.

### <Description of Ink Jet Recording Device>

### [Overall Configuration]

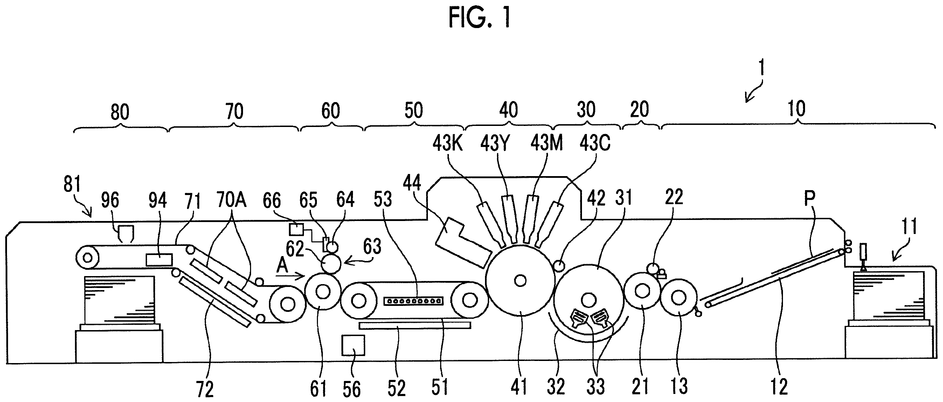

Fig. 1 is an overall configuration view of an ink jet printing device 1 (one example of a printing device) according to the embodiment. The ink jet printing device 1 is configured as a printing device capable of performing varnish coating by applying an in-line system. The ink jet printing device 1 includes a paper feeding unit 10, a processing liquid coating unit 20, a processing liquid drying unit 30, an image recording unit 40, an ink drying unit 50, a varnish coating unit 60, a varnish post-processing unit 70, and an accumulation unit 80.

### [Paper Feeding Unit]

The paper feeding unit 10 feeds sheet P (one example of a recording medium) one by one. The paper feeding unit 10 comprises a paper feeding device 11, a feeder board 12, and a paper feeding drum 13. The sheet P is placed on a paper feeding table of the paper feeding device 11 in a state of a bundle of sheets. The kind of the sheet P is not particularly limited, and for example, general-purpose printing paper such as high-quality paper, coated paper, or art paper can be used. The general-purpose printing paper is not so-called paper exclusive for ink jet, but is coated paper or uncoated paper generally used even in a contact type printing such as offset printing, and indicates paper containing cellulose as a main constituent.

The paper feeding device 11 feeds the sheet to the feeder board 12 by lifting the sheet P accumulated on the paper feeding table one by one in order from the top of the bundle of sheets at regular paper feeding period interval. The feeder board 12 transports the sheet P received from the paper feeding device 11 along a certain transportation path and delivers the sheet to the paper feeding drum 13.

The paper feeding drum 13 transports the sheet P received from the feeder board 12 along a certain transportation path and delivers the sheet to a processing liquid coating drum 21. The paper feeding drum 13 comprises a gripper (not shown) on a peripheral surface of the drum. The paper feeding drum 13 grasps and rotates a front edge of the sheet P by using the gripper (not shown), and winds and transports the sheet P around the peripheral surface of the drum.

### [Processing liquid Coating Unit]

The processing liquid coating unit 20 applies (one example of adding) a processing liquid to the sheet P. The processing liquid of the embodiment is a liquid containing an aggregating agent (one example of an aggregating component) for aggregating components in an ink applied to the sheet P by the image recording unit 40. By applying such a processing liquid to a recording surface of the sheet P and then applying the ink, even in a case of using the general-purpose printing paper, the applied ink does not cause landing interference, and high-quality printing can be performed.

As the aggregating agent, a compound capable of changing pH of an ink composition is preferable, and an acidic product having a high water solubility (one example of acid) is more preferable. The acidic product may be used as one kind or may be used in combination of two or more kinds thereof. The pH has the same meanings as a hydrogen ion exponent and a hydrogen ion concentration index.

In a case of performing the printing by applying such a processing liquid to the sheet P, at least any one of the spread of the ink or movement of the ink is prevented and the formation of a high-quality image can be performed, even in a case of using the general-purpose printing paper. The processing liquid may be called a pre-processing liquid, a pre-coating liquid, or a preconditioning solution. In a case where an ink obtained by dissolving a coloring material component in a solvent is used, a processing liquid which insolubilizes the coloring material component dissolved in the solvent is used.

The processing liquid coating unit 20 comprises the processing liquid coating drum 21 and a processing liquid coating device 22. The processing liquid coating drum 21 transports the sheet P received from the paper feeding drum 13 along a certain transportation path and delivers the sheet to a processing liquid drying drum 31. The processing liquid coating drum 21 comprises a gripper (not shown) on a peripheral surface of the drum. The processing liquid coating drum 21 grasps and rotates a front edge of the sheet P by using the gripper (not shown), and winds and transports the sheet P around the peripheral surface of the drum. The processing liquid coating unit 20 is one example of a processing liquid adding unit.

The processing liquid coating device 22 applies the processing liquid to the recording surface of the sheet P transported by using the processing liquid coating drum 21. The processing liquid coating device 22 of the embodiment applies the processing liquid to the sheet P by a roller coating system. That is, the processing liquid coating device 22 includes a coating roller, presses the coating roller, to a peripheral surface of which the processing liquid is added, against a printing surface of the sheet P, to apply the processing liquid to the sheet P. The coating system of the processing liquid coating device 22 is not particularly limited, and other coating systems such as an ink jet system or a spray system may be used, instead of the roller coating system.

### [Processing liquid Drying Unit]

The processing liquid drying unit 30 dries the processing liquid applied to the sheet P. The processing liquid drying unit 30 comprises the processing liquid drying drum 31, a first sheet guide 32, and a dryer 33.

The processing liquid drying drum 31 transports the sheet P received from the processing liquid coating drum 21 along a certain transportation path and delivers the sheet to an image formation drum 41. The processing liquid drying drum 31 comprises a gripper (not shown) on a peripheral surface of the drum. The paper feeding drum 13 grasps and rotates a front edge of the sheet P by using the gripper (not shown), and winds and transports the sheet P around the peripheral surface of the drum.

The first sheet guide 32 is disposed along a transportation path of the sheet P of the processing liquid drying drum 31 and guides the transportation of the sheet P. The sheet P is transported while sliding on the first sheet guide 32.

The dryer 33 blows hot air to a first surface of the sheet P transported by using the processing liquid drying drum 31, to heat the first surface of the sheet P coated with the processing liquid. The dryer 33 is disposed inside of the processing liquid drying drum 31. The dryer 33, for example, comprises a heat source such as a halogen heater or an infrared ray heater, and air blowing means for sending gas heated using this heat source. The gas heated using the heat source is, for example, the air. Instead of the air or in addition to the air, other gas may be used.

As the air blowing means, for example, at least one of a fan or a blower can be used. In a case where the dryer 33 includes the heater and the air blowing means, it is possible to control a heating intensity by adjusting at least any one of the number of heaters turned on or a light duty ratio.

The hot air from the dryer 33 is blown to the first surface in a process in which the sheet P is transported by using the processing liquid drying drum 31. Accordingly, the first surface which is a processing liquid coating surface of the sheet P is heated, and a solvent component of the processing liquid applied to the sheet P is dried and removed. As a result, an ink aggregating layer is formed on the first surface of the sheet P. The ink aggregating layer is a layer of an ink aggregating agent contained in the processing liquid. The moisture in the processing liquid is evaporated by using the processing liquid drying unit 30, and the ink aggregating layer which is a thin layer of the ink aggregating agent of the processing liquid is formed on the first surface of the sheet P.

### [Image Recording Unit]

The image recording unit 40 forms an image on the first surface of the sheet P by using an ink jet system. The image recording unit 40 comprises the image formation drum 41, a sheet pressing roller 42, an inkjet head 43C, an inkjet head 43M, an inkjet head 43Y, an inkjet head 43K, and a scanner 44.

The image formation drum 41 receives the sheet P from the processing liquid drying drum 31, transports the received sheet P along a certain transportation path, and delivers the sheet to a first chain delivery 51. The image formation drum 41 grasps and rotates a front edge of the sheet P by using a gripper (not shown) provided on a peripheral surface, and winds and transports the sheet P around the peripheral surface.

A plurality of suction holes (not shown) for sheet adsorption are formed on a peripheral surface of the image formation drum 41, and the sheet P is adsorbed and held to the peripheral surface of the image formation drum 41 by using a negative pressure generated in the suction holes. The image formation drum 41 is not limited to a configuration of adsorbing and fixing the sheet P by using the negative pressure suction, and can have a configuration of adsorbing and holding the sheet P by electrostatic adsorption.

The sheet pressing roller 42 presses the sheet P against the peripheral surface of the image formation drum 41 to firmly stick the sheet to the peripheral surface of the image formation drum 41.

The ink jet head 43C, the ink jet head 43M, the inkjet head 43Y, and the inkjet head 43K are respectively recording heads which jet liquid droplets of cyan, magenta, yellow, and black inks.

The cyan, magenta, yellow, and black inks contain at least one kind of a pigment as a coloring material component. The pigment is not particularly limited and can be suitably selected according to the purpose, and, for example, any of an organic pigment or an inorganic pigment may be used. The pigment is preferably a pigment which is substantially insoluble or sparingly soluble in water, from a viewpoint of ink colorability. Each colored ink is supplied to each of the ink jet head 43C, the ink jet head 43M, the ink jet head 43Y, and the inkjet head 43K from an ink tank (not shown).

Each of the inkjet head 43C, the inkjet head 43M, the inkjet head 43Y, and the inkjet head 43K is configured with a line type inkjet head. That is, the inkjet head 43C, the inkjet head 43M, the ink jet head 43Y, and the ink jet head 43K is configured with a line head including a nozzle array in which nozzles are arranged in a length corresponding to a range capable of drawing the maximum sheet width.

Although not shown in Fig. 1, a plurality of nozzles which are jetting ports of ink are two-dimensionally arranged on each nozzle surface of the ink jet head 43C, the ink jet head 43M, the ink jet head 43Y, and the ink jet head 43K. The nozzle surface is a jetting surface on which the nozzles are formed and has the same meaning as an ink jetting surface or a nozzle formation surface. The arrangement of the plurality of two-dimensionally arranged nozzles is referred to as two-dimensional nozzle arrangement.

In a case of the ink jet head having the two-dimensional nozzle arrangement, a projected nozzle array projected to arrange each nozzle of the two-dimensional nozzle arrangement along a nozzle array direction can be considered to be equivalent to one nozzle array in which nozzles are arranged at substantially equal interval at a nozzle density for achieving the maximum recording resolution in the nozzle array direction. The projected nozzle array has the same meaning as a nozzle array obtained by orthogonally projecting each nozzle in the two-dimensional nozzle arrangement along the nozzle array direction.

The substantially equal interval means the substantially equal interval as a jetting point where the recording can be performed by the ink jet printing device. For example, a case where the interval is slightly changed by considering at least any one of errors in manufacturing and movement of a liquid droplet on a medium due to landing interference is also included in the concept of the equal interval. The projected nozzle array corresponds to a substantial nozzle array. Considering the projected nozzle array, a nozzle number representing a nozzle position can be associated with each nozzle in the order of the projected nozzles arranged in the nozzle array direction.

The arrangement aspect of the nozzles of the ink jet head 43C, the inkjet head 43M, the inkjet head 43Y, and the inkjet head 43K is not limited, and various aspects of the nozzle arrangement can be used. For example, instead of the aspect of the matrix two-dimensional arrangement, a linear arrangement of one line, a V-shaped nozzle arrangement, and a nozzle arrangement in a polygonal line such a W shape or the like in which the V-shaped nozzle arrangement is a repeating unit, can also be used.

The ink jet head 43C, the ink jet head 43M, the inkjet head 43Y, and the ink jet head 43K are disposed along the transportation path of the sheet P at regular interval. The ink jet head 43C, the inkjet head 43M, the inkjet head 43Y, and the inkjet head 43K are disposed to extend in a direction orthogonal to a transportation direction of the sheet P. The direction orthogonal to the transportation direction of the sheet P is a direction parallel to a rotation shaft of the image formation drum 41.

The liquid droplets of the ink are jetted towards the sheet P transported by using the image formation drum 41 from at least one head of the inkjet head 43C, the inkjet head 43M, the inkjet head 43Y, and the inkjet head 43K, and the jetted liquid droplets are landed on the sheet P to record an image on the sheet P (one example of an image recording step).

In the embodiment, the configuration using colored inks of four colors of cyan, magenta, yellow, and black has been used, but the combination of the ink colors and the number of colors is not limited to the embodiment, and a light shade ink, a thick ink, and an ink of a special color may be added, if necessary. For example, a configuration in which an ink jet head of jetting an ink of a light color such as a light cyan and a light magenta is added, and a configuration in which an ink jet head of jetting an ink of a special color such as green or orange is added, can also be used. In addition, the disposition order of the inkjet head of each color is not particularly limited.

The scanner 44 is a device which optically reads an image formed on the sheet P by using the inkjet head 43C, the inkjet head 43M, the inkjet head 43Y, and the inkjet head 43K and generates electronic image data showing the read image. The scanner 44 includes an imaging device which captures an image recorded on the sheet P and converts the image into an electric signal showing image information. As the imaging device, a color charge coupled device (CCD) linear image sensor can be used. Instead of the color CCD linear image sensor, a color complementary metal oxide semiconductor (CMOS) linear image sensor can also be used.

The scanner 44 may include an illumination optical system which illuminates a reading target, and a signal processing circuit which processes a signal obtained from the imaging device to generate digital image data, in addition to the imaging device.

The scanner 44 is disposed on a downstream side of the inkjet head 43K positioned on the lowermost stream in the transportation direction of the sheet P, among the inkjet head 43C, the ink jet head 43M, the ink jet head 43Y, and the ink jet head 43K. The scanner 44 performs the reading of an image on the sheet P while transporting the sheet P by the image formation drum 41.

An image on the sheet P is read, in a case where the sheet P, on which the image is formed by using at least one of the inkjet head 43C, the inkjet head 43M, the inkjet head 43Y, and the ink jet head 43K, passes through a reading region of the scanner 44. The image formed on the sheet P can include at least any of a defective nozzle sensing pattern for inspecting a jetting state of each nozzle, a test pattern for printing density correction, a test pattern for printing density unevenness correction, and various other test patterns, in addition to an image of a printing target designated by a printing job.

The inspection of the printed image is performed based on data of the read image read by using the scanner 44, and presence or absence of an image quality abnormality is determined. In addition, it is possible to obtain information such as a density of the printed image, or a jetting failure or the like of the ink jet head 43C, the ink jet head 43M, the ink jet head 43Y, and the inkjet head 43K, based on data of the read image which is read by using the scanner 44.

### [Ink Drying Unit]

The ink drying unit 50 heats the sheet P after forming the image to dry the ink. The ink drying unit 50 comprises a first chain delivery 51, a second sheet guide 52, and a first heating device 53.

The first chain delivery 51 transports the sheet P received from the image formation drum 41 along the transportation path of the sheet P to deliver the sheet to the varnish coating transportation drum 61. The first chain delivery 51 comprises a pair of endless chains travelling along a certain travelling path, and grasps a front edge of the sheet P by using a gripper (not shown) stretched over the one pair of chains to transport the sheet P along a certain transportation path.

The second sheet guide 52 guides the travelling of the sheet P transported by using the first chain delivery 51. The second sheet guide 52 has a hollow board shape and includes a flat guide surface along the transportation path of the sheet P. The sheet P is transported while sliding on the guide surface of the second sheet guide 52. The guide surface of the second sheet guide 52 includes a plurality of suction holes (not shown). The sheet P slides on the guide surface of the second sheet guide 52 while being suctioned from the suction holes. Therefore, it is possible to transport the sheet P while applying a tension to the sheet P.

A transportation belt which adsorbs and holds a rear edge of the sheet P may be included, instead of the second sheet guide 52. The transportation belt travels substantially synchronously with the first chain delivery 51 and transports the sheet P along the travelling direction of the transportation belt.

The first heating device 53 heats an image surface of the sheet P transported by using the first chain delivery 51 to dry the ink. The first heating device 53 is configured by disposing a plurality of rod-like heaters along the transportation direction of the sheet P at regular intervals, for example. Each heater is disposed to be orthogonal to the transportation direction of the sheet P. As the heater, for example, at least one of a halogen heater and an infrared ray heater is used. The first heating device 53 may include air blowing means such as a fan or a blower. In the first heating device 53, a dry strength showing a degree of a strength for drying is adjusted, by changing at least any of the number of heaters turned on and a light duty ratio.

The image surface is heated by using the first heating device 53 in a process in which the sheet P is transported by using the first chain delivery 51, to dry the ink.

The inkjet printing device 1 comprises a first temperature detection unit 56, in order to suitably control an ink drying condition of the ink drying unit 50. The first temperature detection unit 56 detects a temperature of the sheet P subjected to a drying process by using the first heating device 53. The temperature of the sheet P detected by using the first temperature detection unit 56 is, for example, a surface temperature of the sheet P. A noncontact type temperature sensor can be used as the first temperature detection unit 56.

The first temperature detection unit 56 is disposed on a downstream side of the sheet transportation path with respect to the first heating device 53 and at a position before delivering the sheet P to the varnish coating unit 60. The operation of the first heating device 53 is controlled based on the temperature information detected by using the first temperature detection unit 56.

### [Varnish Coating Unit]

The varnish coating unit 60 applies a varnish to the image surface of the sheet P after forming the image. The varnish used in the embodiment is an aqueous varnish. The aqueous varnish is a varnish including water and a solvent soluble in water.

The varnish coating unit 60 comprises the varnish coating transportation drum 61, a varnish coating roller 62, a varnish plate 63, an anilox roller 64, a varnish chamber 65, and a varnish circulating device 66.

The varnish coating transportation drum 61 is a cylindrical drum which receives the sheet P from the first chain delivery 51, transports the received sheet P along a certain transportation path, and delivers the sheet to a second chain delivery 71. The varnish coating transportation drum 61 is fixed to a rotation shaft (not shown) and rotatably driven around the rotation shaft. In addition, the varnish coating transportation drum 61 comprises a claw-shaped gripper (not shown) on an outer peripheral surface thereof. This gripper grasps the front edge of the sheet P at a position where the sheet P is delivered to the first chain delivery 51 and releases the grasp of the sheet P at a position where the sheet P is delivered to the second chain delivery 71.

The varnish coating roller 62 is a roller which transfers and applies (coating) the varnish to the recording surface of the sheet P. The varnish plate 63 (also called a resin plate or a blanket) which selectively holds the varnish on the surface is wound around the outer peripheral surface of the varnish coating roller 62. The varnish plate 63 holds the varnish in a selected region due to ruggedness formed on the surface. The varnish coating roller 62 brings the varnish plate 63 holding the varnish into contact with the recording surface of the sheet P, to which the ink is applied, and transfers and applies the varnish holding on the varnish plate 63 to the recording surface.

The anilox roller 64 is a measuring roller which supplies a certain amount of varnish to the surface of the varnish plate 63 of the varnish coating roller 62. The varnish chamber 65 stores the varnish and supplies the varnish to the anilox roller 64 by dipping a part of the anilox roller 64 to the varnish. The supply of the varnish to the varnish chamber 65 is performed by the varnish circulating device 66.

The varnish circulating device 66 comprises a varnish tank (not shown), a supply pump (not shown) for supplying a varnish from a varnish tank to the varnish chamber 65, and a recovery pump (not shown) for recovering a varnish from the varnish chamber 65 to the varnish tank. An anti-drying agent adding device (not shown) for adding an anti-drying agent to the varnish may be provided in the varnish circulating device 66.

The varnish coating unit 60 configured as described above supplies the varnish from the varnish chamber 65 to the anilox roller 64. Regarding the varnish supplied from the varnish chamber 65, the surplus varnish is scraped off from the surface of the anilox roller 64 by a chamber blade (not shown), and accordingly, a fixed measured quantity of the varnish is evenly supplied to the anilox roller 64. Subsequently, the measured varnish is transferred to the varnish plate 63 of the varnish coating roller 62 from the anilox roller 64.

Meanwhile, the sheet P delivered from the first chain delivery 51 to the varnish coating transportation drum 61 is held on the outer peripheral surface of the varnish coating transportation drum 61, is transported in the transportation direction by rotating the varnish coating transportation drum 61, and arrives a contact point (nip point) between the varnish coating transportation drum 61 and the varnish coating roller 62.

The varnish plate 63 of the varnish coating roller 62 are in contact with the recording surface of the sheet P transported by the varnish coating transportation drum 61 in the nip point, the nip point is gradually moved in the transportation direction in the recording surface of the sheet P, and accordingly, the varnish is selectively applied to the varnish plate 63 of the varnish coating roller 62. The varnish applied to and held by the varnish plate 63 is transferred and applied to the recording surface of the sheet P heated by the ink drying unit 50. That is, the varnish coating unit 60 selectively applies the varnish to the recording surface of the sheet P after the heating in the transportation direction (one example of a varnish coating step).

A gripper (not shown) provided on the outer peripheral surface of the varnish coating transportation drum 61 is protruded to the outside of the outer peripheral surface of the varnish coating transportation drum 61. Accordingly, in the varnish coating transportation drum 61, a base (not shown) is provided on an end portion of the varnish coating transportation drum 61 at a position, where the gripper is disposed, in order to avoid collision of the gripper and the varnish coating roller 62.

After evenly transferring and applying the varnish to the recording surface of the sheet P by the varnish coating roller 62, the varnish coating transportation drum 61 delivers the sheet P to the second chain delivery 71.

The varnish coating unit 60 is configured to adjust a contact pressure between the chamber blade of the varnish chamber 65 and the anilox roller 64, and/or a nip pressure between the varnish plate 63 of the varnish coating roller 62 and the sheet P held in the varnish coating transportation drum 61. In addition, it is possible to adjust a linear speed of the surface of the anilox roller 64 and the surface of the varnish plate 63 of the varnish coating roller 62 and also adjust a supply amount of the varnish to the sheet P.

### [Varnish Post-Processing Unit]

The varnish post-processing unit 70 performs a post-processing of the varnish applied to the surface of the sheet P by the varnish coating unit 60. In a case where the aqueous varnish is used, a heating and drying process is performed as the post- processing of the varnish. The heating and drying process here is a process of heating the image surface of the sheet P, to which the varnish is applied, to dry the varnish, that is, a process of volatilizing moisture or a solvent in the varnish. Therefore, stickiness of the surface of the varnish layer is prevented, and the generation of blocking is prevented.

The varnish post-processing unit 70 comprises the second chain delivery 71, a third sheet guide 72, and a second heating device 70A.

The second chain delivery 71 receives the sheet P from the varnish coating transportation drum 61, transports the received sheet P along a certain transportation path, and discharges the sheet a paper discharge position. The second chain delivery 71 comprises a pair of endless chains travelling along a certain travelling path, and grasps a front edge of the sheet P by using a gripper (not shown) stretched over the one pair of chains to transport the sheet P along a certain transportation path.

The third sheet guide 72 guides the travelling of the sheet P transported by the second chain delivery 71. The third sheet guide 72 has a hollow board shape and includes a flat guide surface along the transportation path of the sheet P. The sheet P is transported while sliding on the guide surface of the third sheet guide 72. The guide surface of the third sheet guide 72 includes a plurality of suction holes (not shown). The sheet P slides on the guide surface while being suctioned from the suction holes. Therefore, it is possible to transport the sheet P while applying a tension to the sheet P.

The second heating device 70A heats the image surface of the sheet P transported by using the second chain delivery 71 to dry the varnish applied to the image surface. Regarding the second heating device 70A, the same configuration as that of the first heating device 53 can be used.

The image surface is heated by using the second heating device 70A in a process in which the sheet P, to which the aqueous varnish is applied, is transported by using the second chain delivery 71, to dry the applied varnish.

The varnish post-processing unit 70 may comprise a cooling processing unit (not shown) which cools the varnish applied to the sheet P. As a configuration example of the cooling processing unit, a configuration including an air blowing fan is used. By performing the cooling process to the varnish, it is possible to increase a viscosity of the varnish. By increasing the viscosity of the varnish, the mixing of a solvent of the ink in the varnish is prevented, and it is possible to prevent stickiness of the varnish.

The inkjet printing device 1 comprises a second temperature detection unit 94, in order to suitably control a varnish drying condition of the varnish post-processing unit 70. The second temperature detection unit 94 detects a temperature of the sheet P, after performing the post-processing of the varnish by using the second heating device 70A. The temperature of the sheet P detected by using the second temperature detection unit 94 is, for example, a surface temperature of the sheet P. As the second temperature detection unit 94, a noncontact type temperature sensor can be used.

The second temperature detection unit 94 is disposed on a downstream side of the sheet transportation path with respect to the second heating device 70A and at a position before the accumulation unit 80. The operation of the second heating device 70A is controlled based on the temperature information detected by using the second temperature detection unit 94.

### [Accumulation Unit]

The accumulation unit 80 stacks the discharged sheets P. The accumulation unit 80 comprises an accumulating device 81. The accumulating device 81 receives the sheet P released from the second chain delivery 71 at a predetermined paper discharge position and stacks and recovers the sheets P on a paper discharge table.

### [Powder Spray Unit]

The ink jet printing device 1 comprises a powder spray unit 96. The powder spray unit 96 sprays a powder to the sheet P to be stacked on the accumulation unit 80. The powder is a powder having a blocking preventing effect. As the powder, a blocking preventing powder used in a printing field can be used.

The powder may be called a blocking preventing agent. The powder may be any of inorganic particles or organic particles. As an example of the powder, particles of a material selected from the group consisting of starch coated with a silicone-based resin, silica, an acrylic resin, a styrene-based resin, a silicone-based resin, and a metal oxide are preferable.

Examples of the acrylic resin include polymethyl acrylate and polymethyl methacrylate. As an example of the styrene-based resin, polystyrene is used. Examples of the metal oxide include titanium oxide, magnesium oxide, and aluminum oxide.

In the ink used in the image formation in the ink jet system, a content of water is higher than that in the ink used in a printing system other than the ink jet system. Accordingly, in the ink jet printing device 1, the powder preferably has hydrophobicity, in order to increase rub resistance of a printed material and prevent generation of an image defect of an image. For example, a powder subjected to a hydrophobization process such as starch coated with a silicone-based resin is more preferable.

The powder spray unit 96 shown in Fig. 1 is disposed at a position on a downstream side in the transportation direction of the sheet P with respect to the second temperature detection unit 94 in the transportation path of the sheet P. The powder spray unit 96 sprays a powder to the sheet P before being stacked in the accumulation unit 80 or the sheet P after placed on the accumulation unit 80.

A powder spray nozzle used as an application unit of the powder in the printing field can be applied to the powder spray unit 96. For the powder spray unit 96, a system such as a blower system or an electrospray system can be applied.

In the printing method of the ink jet printing device 1 configured as described above, the processing liquid is applied to the recording surface of the sheet P in the processing liquid coating unit 20 (one example of a processing liquid adding step), the ink is applied to the recording surface coated with the processing liquid in the image recording unit 40 to record an image (one example of an image recording step), and the varnish is transferred to the recording surface, to which the ink is applied, in the varnish coating unit 60 (one example of a varnish coating step).

### <Principle of Occurrence of Front Edge Coating Abnormality>

A principle of occurrence of a front edge coating abnormality of the varnish will be described.

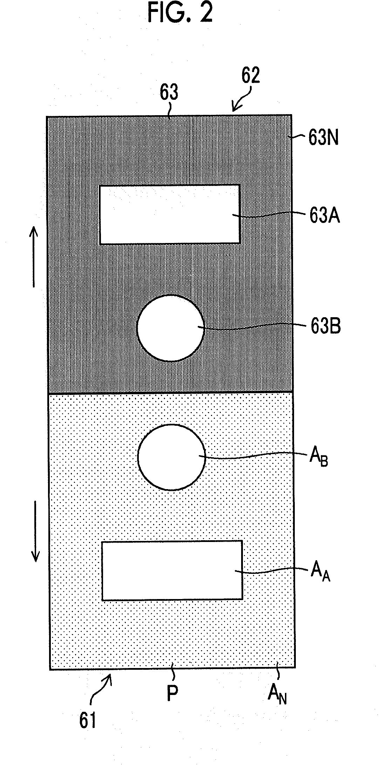

Fig. 2 is a development view of an arrow A of Fig. 1. In the varnish plate 63 shown in Fig. 2, a rectangular recess 63A and a circular recess 63B which are varnish non-coating regions are provided, in addition to a flat portion 63N to which the varnish is supplied.

In the nip point between the anilox roller 64 (see Fig. 1) and the varnish plate 63 of the varnish coating roller 62, the anilox roller 64 comes into contact with the flat portion 63N, and the recess 63A and the circular recess 63B does not come into contact with each other. Accordingly, the varnish is transferred to the flat portion 63N from the anilox roller 64, and the varnish is not transferred to the recess 63A and the recess 63B.

Thus, in a case where the varnish is transferred to the sheet P from the varnish plate 63 in the nip point between the varnish plate 63 and the recording surface of the sheet P, the varnish is applied at a position of the sheet P corresponding to the flat portion 63N, and the varnish is not applied to positions of the sheet P corresponding to the recess 63A and the recess 63B.

In the example shown in Fig. 2, a region A_{N} where the varnish is applied to correspond to the flat portion 63N, a rectangular region A_{A} where the varnish is not applied to correspond to the recess 63A, and a circular region A_{B} where the varnish is not applied to correspond to the recess 63B exist on the sheet P.

During a period of time from the time when the varnish is held by the varnish plate 63 to the time when the varnish is transferred to the sheet P, the drying of the varnish proceeds in a boundary between the flat portion 63N which is a varnish coating region and the recess 63A and the recess 63B which are non-coating regions of the varnish plate 63, and the varnish is in a solidified and precipitated state. A degree of solidification and precipitation depends on properties and the coating amount of the varnish.

Here, acid of the processing liquid exists on the surface of the sheet P. Since the varnish plate 63 in which the varnish is solidified and precipitated comes into contact with the sheet P on which acid exists, an aggregation reaction occurs and the solidified and precipitated material greatly grows.

The varnish plate 63 travels one round, the varnish is supplied from the anilox roller 64 again, and the varnish remaining on the varnish plate 63 (solidified and precipitated material) is replaced with a new varnish. Here, in a case where the varnish solidified and precipitated on the varnish plate 63 is not completely removed, the varnish is not supplied to the solidified and precipitated portion. Accordingly, in a starting point of the varnish coating region (front edge portion) of the sheet P, a phenomenon in which the varnish is not normally applied (front edge coating abnormality) occurs. The solidification and the precipitation of the varnish are accumulated on the varnish plate 63, each time the coating is overlapped. Therefore, in a case where the number of coatings increases, a degree of the front edge coating abnormality is deteriorated.

The front edge coating abnormality easily more easily occurs in a non-image area where the image is not formed, compared to an image area where the image is formed by the jetted ink. This is because that the ink is not applied to the non-image area, whereas the acid on the sheet P is consumed in the image area by the aggregation reaction with the ink, and accordingly, the acid on the sheet P is not consumed.

In addition, it is found that, ease of the occurrence of the front edge coating abnormality has paper dependency, and the front edge coating abnormality easily occurs, as the sheet is a sheet through which the processing liquid hardly permeates.

A reason for that the coating abnormality only occurs in a front edge portion of the coating region and does not occur in a finishing point (rear edge portion) of the varnish coating region is as follows. That is, since the rear edge portion is the finishing point of the coating region, there is no varnish applied after the rear edge portion. Accordingly, the reaction range is limited, and the solidification and the precipitation of the varnish do not proceed. In contrast, since the front edge portion is the starting point of the coating region, a reaction proceeds with the subsequent varnish, and the solidification and the precipitation grow. As a result, in a case where the varnish plate 63 travels one round, the rear edge portion is in a level in which the solidified and precipitated material of the varnish can be removed, but the solidified and precipitated material is not removed and accumulated in the front edge portion.

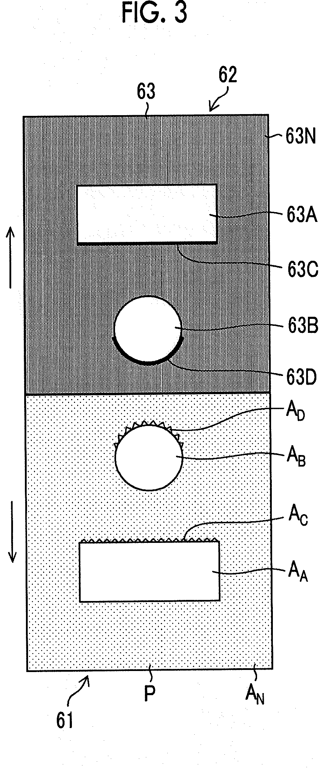

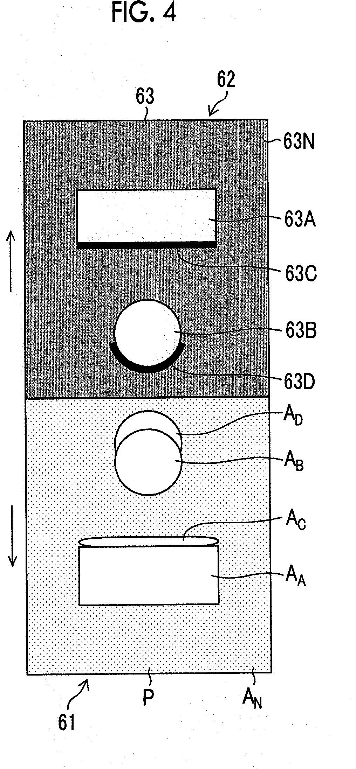

Figs. 3 and 4 are development views of the arrow A of Fig. 1 and schematic views showing aspects in which the front edge coating abnormality occurs.

In an example shown in Fig. 3, among the flat portion 63N of the varnish plate 63, the solidified and precipitated material is attached to a front edge portion 63C in contact with the recess 63A and a front edge portion 63D in contact with the recess 63B, and the boundary of the flat portion 63N is not clear. Accordingly, a boundary portion Ac between the region A_{N} of the sheet P where the varnish is applied and the rectangular region A_{A} where the varnish is not applied does not have a linear shape, and a boundary portion A_{D} between the region A_{N} and the circular region A_{B} where the varnish is not applied does not have an arc shape.

In addition, in an example of Fig. 4, among the flat portion 63N of the varnish plate 63, the solidified and precipitated material grows in the front edge portion 63C in contact with the recess 63A and the front edge portion 63D in contact with the recess 63B, and the varnish is not normally transferred to the flat portion 63N. Therefore, the varnish is not normally applied to the boundary portion Ac between the region A_{N} of the sheet P where the varnish is applied and the rectangular region A_{A} where the varnish is not applied, and the boundary portion A_{D} between the region A_{N} and the circular region A_{B} where the varnish is not applied.

### <Evaluation of Occurrence of Front Edge Coating Abnormality>

Regarding the occurrence of the front edge coating abnormality, the evaluation was performed using ease of drying of the varnish and ease of permeation of the processing liquid with respect to the sheet as parameters.

### [Coating Forming Time of Varnish]

In the embodiment, the coating forming time of the varnish is used as an index showing the ease of drying of the varnish. The coating forming time of the varnish is defined as a period of time until a wrinkle is generated (coating is formed) on the varnish in the cup in a case where 5 grams of the varnish is put into a plastic flat-bottomed container (cup) having a diameter of 60 millimeters, the cup is horizontally placed on a hot plate at a temperature of 80°C, and then the cup is tilted at an angle of 45° with respect to the horizontal per minute. Here, the wrinkle indicates a recess which is generated on the surface of the varnish by flowing of the varnish having a viscosity increased due to heat applied from the hot plate by the tilt of the cup. The long coating forming time means that it is difficult to dry the varnish.

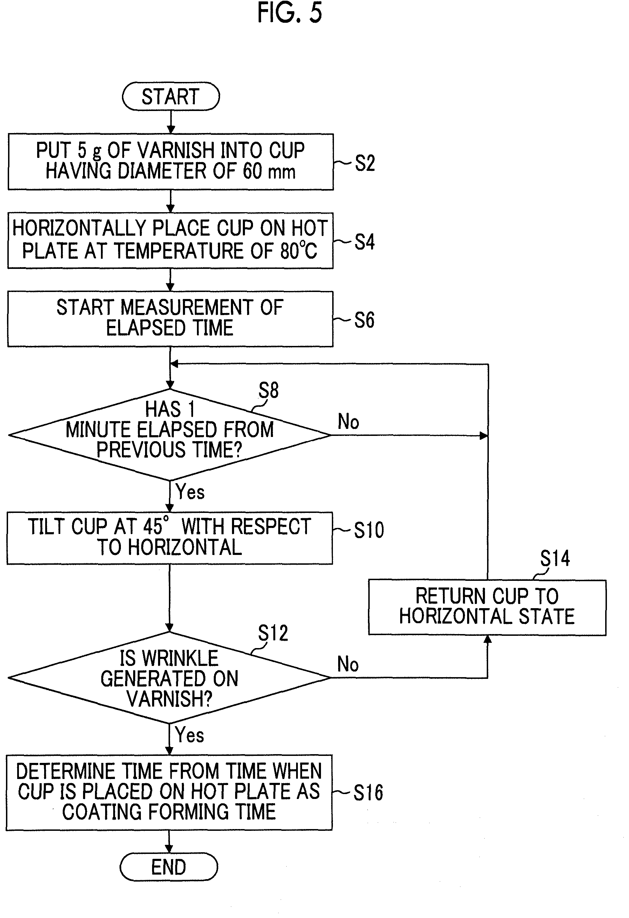

The measurement method of the coating forming time of the varnish will be described using a flowchart shown in Fig. 5.

Initially, 5 g of a varnish, a coating forming time of which is desired to be measured, is put into a plastic cup (one example of the container) (Step S2). The bottom of this cup is a flat bottom having a diameter of 60 millimeters.

Next, this cup is horizontally placed on a hot plate heated to 80°C (Step S4), and the measurement of elapsed time from the time when the cup is placed on the hot plate is started (Step S6).

Then, it is determined whether or not the 1 minute has elapsed from the time when the cup is placed on the hot plate (Step S8). In a case where 1 minute has not elapsed, a determination process of Step S8 is subsequently performed.

In a case where 1 minute has elapsed, the process proceeds to Step S10, the cup is tilted at an angle of 45° with respect to the horizontal (Step S10), and it is determined whether or not a wrinkle is generated on the varnish in the cup (Step S12).

In a case where a wrinkle is not generated, the cup is returned to a horizontal state (Step S14), and the process returns to the process of Step S8. The time till the cup is tilted and returned to the horizontal state is approximately 1 second.

In Step S8, it is determined whether or not 1 minute has elapsed from the time when the cup is tilted, and in a case where 1 minute has elapsed, the process proceeds to Step S10. That is, the cup is tilted every one minute, and it is determined whether or not a wrinkle is generated on the varnish.

In a case where a wrinkle is generated, the elapsed time from the time when the cup is placed on the hot plate till the time when a wrinkle is generated on the varnish is determined as the coating forming time of this varnish (Step S16), and the process of this flowchart ends. The unit of the coating forming time is the minute.

As described above, the coating forming time of each commercially available varnish or a varnish obtained by mixing commercially available varnishes were obtained in advance.

### [Contact Angle between Sheet and Processing Liquid]

In the embodiment, the contact angle is used as an index of the ease of permeation of the processing liquid with respect to the sheet.

The contact angle is defined as a value obtained by adding dropwise 2 microliters of the processing liquid to the surface of the sheet and measuring the contact angle between the processing liquid and the sheet after 300 milliseconds from the dropwise addition, by using a contact angle meter Drop Master manufactured by Kyowa Interface Science, Inc.

### [Experiment Condition]

As an output device, Jet Press manufactured by Fujifilm Corporation was used. Jet Press includes an in-line type varnish coater.

As the processing liquid, a processing liquid L was used. The components of the processing liquid L are shown below.

### Organic acid: 15% to 25% by mass (in this experiment, 20% by mass)

As the organic acid, malonic acid, malic acid, or citric acid can be used.

### Latex: 10% to 20% by mass (in this experiment, 13% by mass)

Solvent: 1% to 10% by mass (in this experiment, 2% by mass)

As the solvent, DEGmBE (diethylene glycol monobutyl ether) or DEGmEE (diethylene glycol monoethyl ether) can be used.

### Water: residual quantity which is 100% by mass in total

As the varnish, a varnish VA to a varnish VF were used. Product names and manufacturers of the varnish VA to the varnish VF are shown in Table 1. The coating forming times of the varnish VA to the varnish VF were measured, and the coating forming times were respectively 20 minutes, 12 minutes, 9 minutes, 4 minutes, 20 minutes, and 11 minutes.

**[Table 1]**

| | Varnish | Varnish manufacturer |
|---|---|---|
| VA | XW383 | Hi-tech Coatings |
| VB | XW383(33%)+W985(67%) | Hi-tech Coatings |
| VC | XW383(20%)+W985(80%) | Hi-tech Coatings |
| VD | W8685 | Hi-tech Coatings |
| VE | HYDLITH212M | DIC Corporation |
| VF | HYDLITH206M | DIC Corporation |

### In addition, as the sheet, a sheet PA to a sheet PF were used. Product names and manufacturers of the sheet PA to the sheet PF are shown in Table 2. The contact angles of the processing liquid L and the sheet PA to the sheet PF were measured, and contact angles were respectively 54.6°, 62.3°, 69.5°, 75.2°, 82.3°, and 85.7°.

**[Table 2]**

| | Sheet | Sheet manufacturer |
|---|---|---|
| PA | Crescendo 260gsm | West Rock |
| PB | Kondor 350gsm | Buchmannkarton |
| PC | Magno Gloss 300gsm | Sappi |
| PD | Invercote Albato 290gsm | Iggesund |
| PE | Incada Silk 300gsm | Iggesund |
| PF | Simkote 290gsm | Metsaboard |

As the processing liquid coating amount (one example of addition amount), the evaluation was performed under three conditions of 1.0, 1.5, and 2.0 gsm (grams per square meter). In addition, as the varnish coating amount (one example of addition amount), the evaluation was performed under three conditions of 3.5, 4.5, and 6.0 gsm (grams per square meter).

As the evaluation flow, the processing liquid coating and the in-line varnish coating were performed in the printing operation, and an occurrence level of the front edge coating abnormality of the 50-th sheet was inspected. Regarding the front edge coating abnormality, a coating degree at a coating starting position (front edge portion) of the varnish in the non-image area was visually evaluated. The standard of the occurrence level of the front edge coating abnormality is as follows.
A: not occurred.
B: slightly occurred, but acceptable.
C: partially occurred (beyond the acceptable range).
D: entirely occurred (beyond the acceptable range).

### [Relationship Between Coating Forming Time, Contact Angle, and Occurrence Level of Front Edge Coating Abnormality]

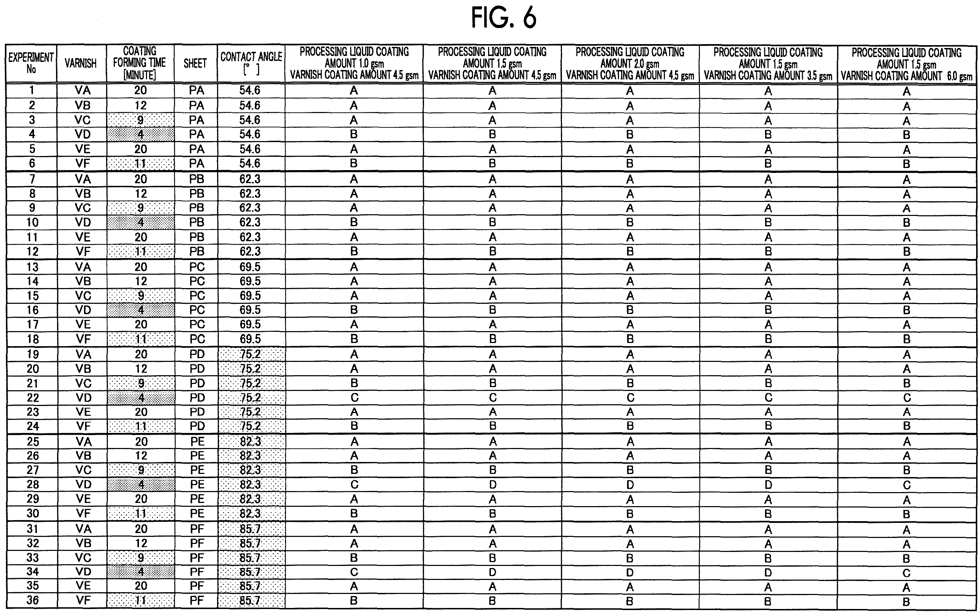

Fig. 6 is a table showing results obtained by evaluating occurrence levels of the front edge coating abnormality, in a case where the conditions of the processing liquid coating amount and the varnish coating amount are changed in each combination of six types of varnishes and six types of sheets.

As shown in Fig. 6, it is found that, as the varnish has a long coating forming time or the contact angle between the processing liquid and the sheet is small, the front edge coating abnormality is improved. In a case where the contact angle between the processing liquid and the sheet is smaller than 70°, the front edge coating abnormality is in the acceptable range, regardless of the coating forming time of the varnish, but in a case where the contact angle is equal to or greater than 70°, the front edge coating abnormality is not in the acceptable range, unless the varnish has the coating forming time of 9 minutes or longer. In addition, it is found that, in a case where the varnish has the coating forming time of 12 minutes or longer, the front edge coating abnormality does not occur, regardless of the value of the contact angle.

As described above, in order to prevent the front edge coating abnormality, the processing liquid coating unit 20 preferably applies the varnish having the coating forming time of 9 minutes or longer. In addition, the varnish having the coating forming time of 12 minutes or longer is more preferably used. By using the varnish having the coating forming time of 12 minutes or longer, it is possible to ensure robustness with respect to a disturbance such as a device environment.

From a viewpoint of productivity of the printed material, the varnish having the coating forming time of 20 minutes or shorter is preferably used.

In addition, the coating amount of the processing liquid is preferably equal to or smaller than 2.0 grams per square meter, and the varnish coating amount is preferably equal to or greater than 3.5 grams per square meter. This is because the front edge coating abnormality may be deteriorated, in a case where the coating amount of the processing liquid is excessively great or the varnish coating amount is excessively small.

### [Adjustment of Coating Forming Time Due To Anti-Drying Agent]

As described above, in a case where the contact angle is equal to or greater than 70°, it is necessary to use the varnish having the coating forming time of 9 minutes or longer, in order to prevent the front edge coating abnormality. However, the coating forming time may also be shorter than 9 minutes depending on the type of the varnish. In this case, by adding the anti-drying agent to the varnish, it is possible to extend the coating forming time of the varnish and prevent the occurrence of the front edge coating abnormality.

As the anti-drying agent added to the varnish, a solvent is mainly preferable, and propylene glycol, 2-methyl-1,3-propanediol, and N-methyldiethanolamine are particularly preferable. These are merely examples and are not particularly limited, as long as it is a general solvent.

As a specific adjustment method of the coating forming time, it is preferable that a solvent is added to a varnish in advance, the coating forming time is measured by the measurement method described above, and the amount to be added is determined in advance. The adjustment can also be performed by measuring the coating forming time, while adding a small amount of the solvent to the varnish tank of the printing device.

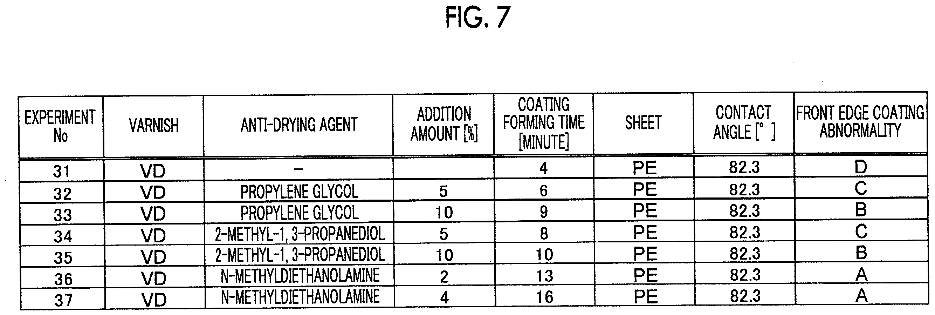

Fig. 7 is a table showing results obtained by evaluating occurrence levels of the coating forming time and the front edge coating abnormality regarding varnishes VD, to which 5% by mass and 10% by mass of propylene glycol are added as anti-drying agent, varnishes VD, to which 5% by mass and 10% by mass of 2-methyl-1,3-propanediol are added, and varnishes VD, to which 2% by mass and 4% by mass of N-methyldiethanolamine are added. In addition, the evaluation was performed under the conditions in which the sheet PE was used, the processing liquid coating amount was 1.5 gsm, and the varnish coating amount was 4.5 gsm.

As shown in Fig. 7, in a case where the coating forming time was 9 minutes or longer, the front edge coating abnormality was in the acceptable range.

### [Applying of Clear Ink]

By applying a clear ink not containing a coloring material component to a region (non-image area) other than a region (image area) to which colored inks containing coloring material components (cyan ink, magenta ink, yellow ink, and black ink) were applied, it is possible to alleviate the aggregation reaction of the non-image area and improve the front edge coating abnormality.

The clear ink supplements the latex amount to the colored ink by the amount corresponding to the coloring material component (here, pigment). As described above, the aggregating components of the clear ink and the colored ink are preferably equivalent to each other. In addition, the viscosity of the clear ink and the colored ink is preferably equivalent to each other. The equivalent state here is not limited to the same amount in a strict sense, and is a concept of substantially the same amount in a range where the effect of the embodiment is recognized.

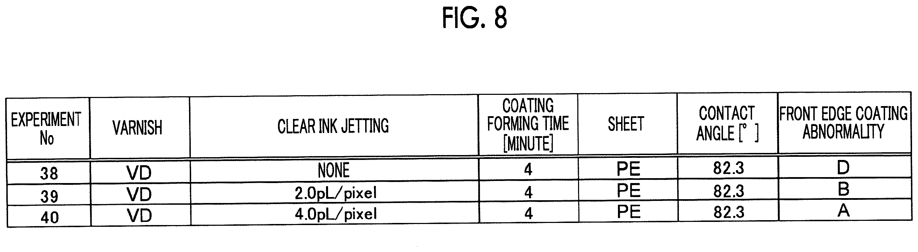

Fig. 8 is a table showing results obtained by evaluating occurrence levels of the front edge coating abnormality regarding combinations of the varnish VD and the sheet PE, in which 2.0 picoliter/pixel of clear ink is applied to the non-image area, and 4.0 picoliter/pixel thereof is applied. In addition, the evaluation was performed under the conditions in which the processing liquid coating amount was 1.5 gsm and the varnish coating amount was 4.5 gsm.

As shown in Fig. 8, in a case where the clear ink was applied to the non-image area, the front edge coating abnormality was in the acceptable range, even in a case of the combination in which the contact angle was 82.3° and the coating forming time was 4 minutes.

### [cleaning of varnish plate]

It is also effective to attach an automobile cleaning mechanism (one example of a cleaning unit) to the varnish plate 63. It is preferable that the cleaning mechanism is provided in a section between the point where the varnish is transferred to the sheet P and the point where the varnish is supplied by the anilox roller 64. The solidified and precipitated material of the varnish is removed by the cleaning mechanism at this timing. Specifically, a mechanism of scraping off the solidified and precipitated material of the varnish by touching with a member such as a brush is preferable.

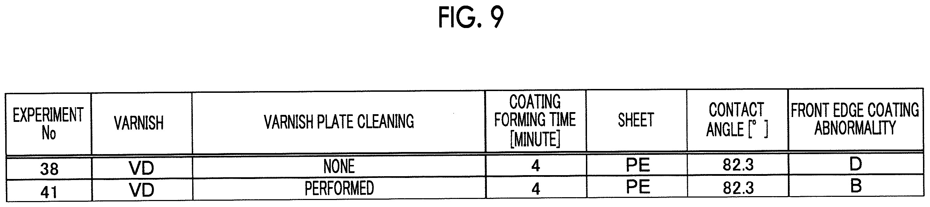

Fig. 9 is a table showing results obtained by evaluating occurrence levels of the front edge coating abnormality, in a case where the cleaning mechanism of cleaning the varnish plate 63 is provided in the combination of the varnish VD and the sheet PE. In addition, the evaluation was performed under the conditions in which the processing liquid coating amount was 1.5 gsm and the varnish coating amount was 4.5 gsm.

As shown in Fig. 9, by providing the cleaning mechanism in the varnish plate 63, the front edge coating abnormality was in the acceptable range, even in a case of the combination in which the contact angle was 82.3° and the coating forming time was 4 minutes.

### <Varnish Information Output Method>

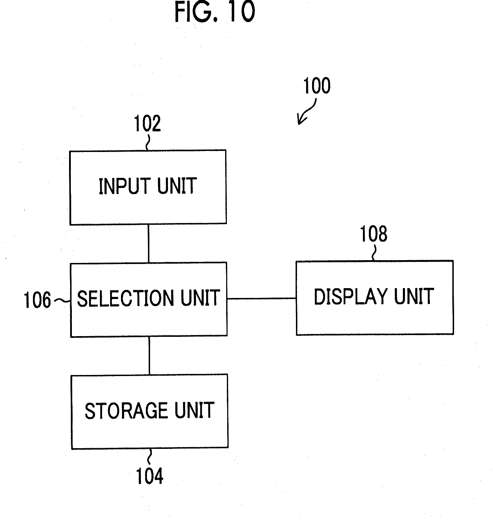

Fig. 10 is a block diagram of a selection device 100 which selects an optimal combination of the processing liquid, the sheet, and the varnish used in the ink jet printing device 1. The selection device 100 may be a part of the inkjet printing device 1 or may be configured alone as the selection device 100. As shown in Fig. 10, the selection device 100 comprises an input unit 102, a storage unit 104, a selection unit 106, and a display unit 108.

The input unit 102 is an interface for a user to input information of the processing liquid and the sheet, and includes an input device such as a mouse or a keyboard. The input unit 102 may be a wired or wireless communication interface for performing transmission and reception of information of the processing liquid and the sheet to and from an external device such as a computer.

The storage unit 104 is a storage device such as a hard disk device, and stores each contact angle for each combination of the plurality of processing liquids and the plurality of sheets. In addition, the plural kinds of the varnish and the coating forming times of the varnishes are stored in relation to each other. The storage unit 104 may store a suitable combination (the front edge coating abnormality does not occur) of the processing liquid, the sheet, and the varnish, or may store a suitable combination (the front edge coating abnormality occurs) of the processing liquid, the sheet, and the varnish, based on the occurrence level of the front edge coating abnormality in the relationship of the contact angle and the coating forming time.

In addition, the storage unit 104 may store the varnish, the anti-drying agent for setting the coating forming time of the varnish to be 9 minutes or longer, and the addition amount thereof, or may store the anti-drying agent for setting the coating forming time of the varnish to be 12 minutes or longer, and the addition amount thereof.

The selection unit 106 selects the varnish which can be used in the ink jet printing device 1, based on information of the processing liquid and the sheet input from the input unit 102. In addition, the selection unit selects the sheet which can be used in the ink jet printing device 1, based on information of the processing liquid and the varnish input from the input unit 102. Further, the selection unit selects the anti-drying agent for setting the coating forming time of the varnish to be 9 minutes or longer or 12 minutes or longer, and the addition amount thereof, based on information of the varnish input from the input unit 102.

The display unit 108 is an interface for displaying the information selected by the selection unit 106 and comprises a display device such as liquid crystal monitor or the like.

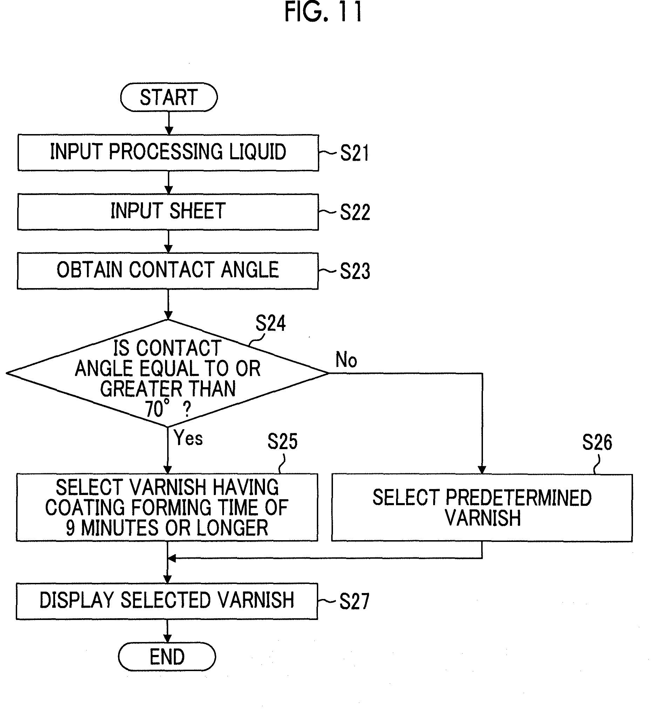

Fig. 11 is a flowchart showing a process of a varnish information output method of the selection device 100.

In Step S21, a user inputs the information of the processing liquid used in the processing liquid coating unit 20 of the ink jet printing device 1 from the input unit 102 (one example of a processing liquid information input unit) (one example of a processing liquid information input step).

Next, in Step S22, a user inputs the information of the sheet P used in the ink jet printing device 1 from the input unit 102 (one example of a recording medium information input unit) (one example of a recording medium information input step).

Then, in Step S23, the selection unit 106 (one example of a contact angle obtaining unit) obtains the contact angle between the processing liquid input in Step S1 and the sheet P input in Step S2 from the storage unit 104 (one example of a contact angle obtaining step). In the selection unit 106, the contact angle may be actually measured.

In addition, in Step S24, the selection unit 106 determines whether or not the contact angle obtained in Step S23 is equal to or greater than 70°. In a case where the contact angle is equal to or greater than 70°, the process proceeds to Step S25, and in a case where the contact angle is smaller than 70°, the process proceeds to Step S26.

In Step S25, the selection unit 106 selects the varnish having the coating forming time of 9 minutes or longer from the plurality of varnishes stored in the storage unit 104 (one example of a selection step). The varnish having the coating forming time of 9 minutes or longer may be a varnish having the coating forming time which is set as 9 minutes or longer, by adding the anti-drying agent in advance. In addition, the varnish having the coating forming time shorter than 9 minutes may be selected, and the anti-drying agent and the addition amount of the anti-drying agent may be selected in combination. The selected varnish may be more than one.

In addition, in Step S26, the selection unit 106 selects the predetermined varnish from the plurality of varnishes stored in the storage unit 104 (one example of a selection step). For example, the varnish which can be used may be selected from the plurality of varnishes. In a case where the contact angle between the processing liquid and the sheet is smaller than 70°, the front edge coating abnormality is in the acceptable range, regardless of the coating forming time of the varnish. Accordingly, the predetermined varnish may be the varnish having the coating forming time of 9 minutes or longer or may be the varnish having the coating forming time less than 9 minutes, from a viewpoint of productivity. The selected varnish may be more than one.

Finally, in Step S27, the information of the varnish selected by the selection unit 106 is displayed on the display unit 108 (one example of an output unit) (one example of an output step). Therefore, a user can use the suitable varnish according to the processing liquid and the sheet used.

### <Recording Medium Information Output Method>

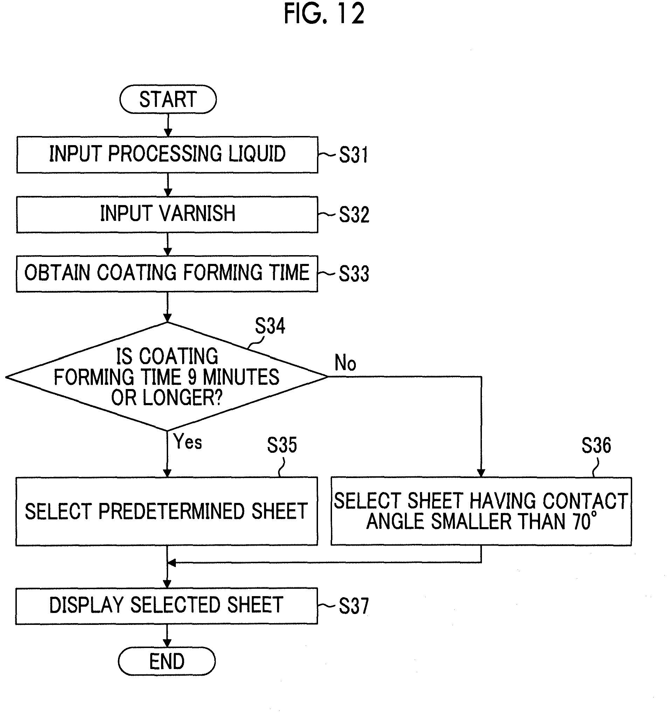

Fig. 12 is a flowchart showing a process of a recording medium information output method by the selection device 100.

In Step S31, a user inputs the information of the processing liquid used in the processing liquid coating unit 20 of the ink jet printing device 1 from the input unit 102 (one example of a processing liquid information input unit) (one example of a processing liquid information input step).

Next, in Step S32, a user inputs the information of the varnish used in the varnish coating unit 60 of the ink jet printing device 1 from the input unit 102 (one example of a varnish information input unit) (one example of a varnish information input step).

Then, in Step S33, the selection unit 106 (one example of coating forming time obtaining unit) obtains the coating forming time of the varnish input in Step S12 from the storage unit 104 (one example of a coating forming time obtaining step). The selection unit 106 may actually measure the coating forming time of the varnish.

In Step S34, the selection unit 106 determines whether or not the coating forming time obtained in Step S33 is 9 minutes or longer. In a case where the coating forming time is 9 minutes or longer, the process proceeds to Step S35, and in a case where the coating forming time is less than 9 minutes, the process proceeds to Step S36.

In Step S35, the selection unit 106 selects the predetermined sheet from the plurality of sheets stored in the storage unit 104 (one example of a selection step). For example, the sheet which can be used may be selected from the plurality of sheets. In a case of the varnish having the coating forming time of 9 minutes or longer, the front edge coating abnormality is in the acceptable range, regardless of the contact angle. Therefore, the predetermined sheet may be a sheet having the contact angle with the processing liquid input in Step S31 equal to or greater than 70°. The selected sheet may be more than one.

In addition, in Step S36, the selection unit 106 selects the sheet having the contact angle with the processing liquid selected in Step S11 smaller than 70° from the plurality of sheets stored in the storage unit 104 (one example of a selection step). The selected sheet may be more than one. The sheet having the contact angle equal to or greater than 70° may be selected, and the anti-drying agent for setting the coating forming time of the varnish input in Step S32 to be 9 minutes or longer, and the addition amount of the anti-drying agent may be selected.

Finally, in Step S37, the information of the sheet selected in the selection unit 106 is displayed on the display unit 108 (one example of an output unit) (one example of an output step). Accordingly, a user can use an optimal sheet according to the processing liquid and the varnish used.

### <Other Configurations>

Here, the example of performing the varnish coating in the in-line system in the printing device has been described, but the coating of the varnish is not limited to the in-line system, and the coating may be performed in the off-line or on-line system by using a varnish coating device other than the printing device.

Here, the varnish coating in the off-line system is an aspect in which the printing and the varnish coating are separately performed, and each process is performed completely independently. In this case, the sheet accumulated in the printing device is set in the varnish coating device, and the process of the varnish coating is performed. Accordingly, in the varnish coating in the off-line system, the sheet is temporarily accumulated after the printing. In addition, the time interval from the printing to the varnish coating tends to increase.

Meanwhile, the varnish coating in the on-line system is an aspect in which the printing and the varnish coating are continuously performed as a series of processes. The varnish coating in the on-line system is performed by connecting the printing device and the varnish coating device in series. That is, the process can be continuously performed by feeding the sheet discharged from the printing device to the varnish coating device as it is. The varnish coating in the on-line system is common with the varnish coating in the in-line system, in that the printing and the varnish coating are continuously performed, but is different, in that the printing and the varnish coating are performed by separate devices. Due to this difference, the time interval to the varnish coating is longer than the varnish coating in the in-line system. The sheet discharged from the printing device is fed to the varnish coating device as it is, and accordingly, the varnish coating in the on-line system is different from the varnish coating in the off-line system, in that the sheet after the printing is not accumulated before the varnish coating.

The printing method, the varnish information output method, and the recording medium information output method are configured as a program for realizing each step in a computer, and a non-temporary recording medium such as a compact disk-read only memory (CD-ROM) storing this program can be configured.

In the embodiment described here, for example, the hardware structures of the processing units executing various processes such as the input unit 102, the selection unit 106, and the display unit 108 are various processors shown below. In various processors, a central processing unit (CPU) which is a general-purpose processor functioning as various processing units by executing software (program), a programmable logic device (PLD) which is a processor which can change a circuit configuration after manufacturing such as a field programmable gate array (FPGA), and an exclusive electric circuit which is a processor having a circuit configuration designed exclusively for executing specific processes such as an application specific integrated circuit (ASIC) are included.

One processing unit may be configured with one processor among these various processors, or may be configured with the same or different types of two or more processors (for example, combination of a plurality of FPGAs or a CPU and an FPGA). In addition, the plurality of processing units may be configured with one processor. As an example in which the plurality of processing units are configured with one processor, first, one processor is configured with a combination of one or more CPUs and software as represented by a computer such as a server and a client, and this processor functions as the plurality of processing units. Secondly, the processor of realizing the functions of the entire system including the plurality of processing units by one integrated circuit (IC) chip is used, as represented by a system on chip (SoC). As described above, various processing units are configured using one or more various processors, as the hardware structure.

In addition, the hardware structure of various processors is more specifically an electric circuit (circuitry) obtained by combining a circuit element such as a semiconductor element.

The scope of the invention is defined by the appended claims.

### Explanation of References

1: ink jet printing device
10: paper feeding unit
11: paper feeding device
12: feeder board
13: paper feeding drum
20: processing liquid coating unit
21: processing liquid coating drum
22: processing liquid coating device
30: processing liquid drying unit
31: processing liquid drying drum
32: first sheet guide
33: dryer
40: image recording unit
41: image formation drum
42: sheet pressing roller
43C: inkjet head
43K: inkjet head
43M: inkjet head
43Y: inkjet head
44: scanner
50: ink drying unit
51: first chain delivery
52: second sheet guide
53: first heating device
56: first temperature detection unit
60: varnish coating unit
61: varnish coating transportation drum
62: varnish coating roller
63: varnish plate
63A: recess
63B: recess
63C: front edge portion
63D: front edge portion
63N: flat portion
64: anilox roller
65: varnish chamber
66: varnish circulating device
70: varnish post-processing unit
70A: second heating device
71: second chain delivery
72: third sheet guide
80: accumulation unit
81: accumulating device
94: second temperature detection unit
96: powder spray unit
100: selection device
102: input unit
104: storage unit
106: selection unit
108: display unit
A_{A}: region
A_{B}: region
A_{C}: boundary portion
A_{D}: boundary portion
A_{N}: region
P: sheet
S2 to S16: steps of measurement method of coating forming time of varnish
S21 to S27: steps of varnish information output method
S31 to S37: steps of recording medium information output method

## Claims

1. A printing device comprising:
a processing liquid adding unit (20) adapted to add a processing liquid containing acid as an aggregating component which aggregates components in an ink and having a contact angle with a recording surface of a recording medium equal to or greater than 70°, to the recording surface;
an image recording unit (40) adapted to apply an ink to the recording surface, to which the processing liquid is added, from an inkjet head to record an image; and
a varnish coating unit (60) which includes a varnish coating roller (62) to the outer peripheral surface of which is wound a vanish plate (63) and which brings the varnish plate (63) holding a varnish in a selected region (A_{N}) into contact with the recording surface, to which the ink is applied, to transfer and apply the varnish held in the varnish plate (63) to the recording surface, and an anilox roller (64) which transfers the varnish supplied from a chamber (65) to the varnish plate (63); wherein a coating forming time of the varnish is 9 minutes or longer, and wherein the coating forming time is determined as follows:
obtaining a period of time until a wrinkle is generated on the varnish in a container in a case where a plastic flat-bottomed container having a diameter of 60 millimeters containing 5 grams of the varnish is horizontally placed on a plate at 80°C, and then the container is tilted at an angle of 45° with respect to the horizontal.

2. The printing device according to claim 1,
wherein the varnish includes an anti-drying agent..

3. The printing device according to claim 1 or 2,
wherein the coating forming time of the varnish is 12 minutes or longer.

4. The printing device according to any one of claims 1 to 3,
wherein the processing liquid adding unit adds the processing liquid by an addition amount of 2.0 grams per square meter or less.

5. The printing device according to any one of claims 1 to 4,
wherein the varnish coating unit applies the varnish by an addition amount of 3.5 grams per square meter or more.

6. The printing device according to any one of claims 1 to 5,
wherein the image recording unit applies a clear ink not containing a coloring material component in a region other than a region to which a colored ink containing a coloring material component is applied.

7. The printing device according to claim 6,
wherein the amounts of aggregating components in the colored ink and the clear ink are equal to each other.

8. The printing device according to any one of claims 1 to 7,
wherein the varnish coating unit includes a cleaning unit which comes into contact with the varnish plate to clean the varnish plate, in a position between a position where the varnish held in the varnish plate is transferred and applied to the recording surface and a position where a new varnish is transferred to the varnish plate from the anilox roller.

9. The printing device according to claim 1, comprising:
a recording medium information input unit which inputs information of the recording medium;
a processing liquid information input unit which inputs information of the processing liquid;
a contact angle obtaining unit which obtains a contact angle between the processing liquid and the recording medium;
a storage unit (104) which stores a plurality of varnishes and coating forming times of the plurality of varnishes in relation to each other, and
an output unit which outputs information of the varnish having the coating forming time of 9 minutes or longer, in a case where the obtained contact angle is equal to or greater than 70°.

10. A printing device according to claim 1, comprising:
a processing liquid information input unit which inputs information of the processing liquid;
a varnish information input unit which inputs information of the varnish;
a storage unit (104) which respectively stores contact angles of combinations of the plurality of recording media and the plurality of processing liquids; and
an output unit which outputs information of the recording medium having the contact angle with the processing liquid smaller than 70°, in a case where the obtained coating forming time is shorter than 9 minutes.

11. A printing method comprising:
a processing liquid adding step of adding a processing liquid containing acid as an aggregating component which aggregates components in an ink and having a contact angle with a recording surface of a recording medium equal to or greater than 70°, to the recording surface;
an image recording step of applying an ink to the recording surface, to which the processing liquid is added, from an inkjet head to record an image; and
a varnish coating step of applying a varnish to the recording surface by a varnish coating roller which brings a varnish plate holding a varnish in a selected region into contact with the recording surface, to which the ink is applied, to transfer and apply the varnish held in the varnish plate to the recording surface, and an anilox roller which transfers the varnish supplied from a chamber to the varnish plate, the varnish plate being attached to a peripheral surface of the varnish coating roller,
setting a coating forming time of the varnish to 9 minutes or longer, the coating forming time being a period of time until a wrinkle is generated on the varnish in the container in a case where a plastic flat-bottomed container having a diameter of 60 millimeters containing 5 grams of the varnish is horizontally placed on a plate at 80°C, and then the container is tilted at an angle of 45° with respect to the horizontal.

12. A varnish information output method of outputting information of a varnish to be used in a printing device including a processing liquid adding unit which adds a processing liquid containing acid as an aggregating component which aggregates components in an ink to a recording surface of a recording medium, an image recording unit which applies an ink to the recording surface, to which the processing liquid is added, from an inkjet head to record an image, and a varnish coating unit which includes a varnish coating roller which brings a varnish plate holding a varnish in a selected region into contact with the recording surface, to which the ink is applied, to transfer and apply the varnish held in the varnish plate to the recording surface, and an anilox roller which transfers the varnish supplied from a chamber to the varnish plate, the varnish plate being attached to a peripheral surface of the varnish coating roller, the method comprising:
a recording medium information input step of inputting information of a recording medium to be used in the printing device;
a processing liquid information input step of inputting information of a processing liquid to be used in the printing device;
a contact angle obtaining step of obtaining a contact angle between the processing liquid to be used and the recording medium to be used; and
an output step of outputting information of a varnish having a coating forming time of 9 minutes or longer, assuming that a period of time until a wrinkle is generated on the varnish in the container in a case where a plastic flat-bottomed container having a diameter of 60 millimeters containing 5 grams of the varnish is horizontally placed on a plate at 80°C, and then the container is tilted at an angle of 45° with respect to the horizontal, is a coating forming time.

13. A recording medium information output method of outputting information of a recording medium to be used in a printing device including a processing liquid adding unit which adds a processing liquid containing acid as an aggregating component which aggregates components in an ink to a recording surface of a recording medium, an image recording unit which applies an ink to the recording surface, to which the processing liquid is added, from an ink jet head to record an image, and a varnish coating unit which includes a varnish coating roller which brings a varnish plate holding a varnish in a selected region into contact with the recording surface, to which the ink is applied, to transfer and apply the varnish held in the varnish plate to the recording surface, and an anilox roller which transfers the varnish supplied from a chamber to the varnish plate, the varnish plate being attached to a peripheral surface of the varnish coating roller, the method comprising:
a processing liquid information input step of inputting information of a processing liquid to be used in the printing device;
a varnish information input step of inputting information of a varnish to be used in the printing device;
a coating forming time obtaining step of obtaining a coating forming time of the input varnish, assuming that a period of time until a wrinkle is generated on the varnish in the container in a case where a plastic flat-bottomed container having a diameter of 60 millimeters containing 5 grams of the varnish is horizontally placed on a plate at 80°C, and then the container is tilted at an angle of 45° with respect to the horizontal, is a coating forming time; and
an output step of outputting information of the recording medium having a contact angle with a processing liquid to be used smaller than 70°, in a case where the obtained coating forming time is shorter than 9 minutes.

## Patentansprüche

1. Druckvorrichtung, umfassend:
eine Verarbeitungsflüssigkeit-Zugabeeinheit (20), ausgebildet zum Zugeben einer Verarbeitungsflüssigkeit, die eine Säure als Aggregationskomponente enthält, die Komponenten einer Tinte aggregiert, und die einen Kontaktwinkel mit einer Aufzeichnungsfläche eines Aufzeichnungsträgers von gleich oder mehr als 70° aufweist, auf die Aufzeichnungsfläche zu bringen;
eine Bildaufzeichnungseinheit (40), ausgebildet zum Aufbringen einer Tinte auf die Aufzeichnungsfläche, auf die die Verarbeitungsflüssigkeit aufgegeben wurde, aus einem Tintenstrahlkopf zum Aufzeichnen eines Bilds; und
eine Lackbeschichtungseinheit (60), die eine Lackbeschichtungswalze (62) enthält, auf deren Umfangsfläche eine Lackplatte (63) aufgewickelt ist, und die die Lackplatte (63), die einen Lack hält, in eine ausgewählte Zone (A_{N}) in Berührung mit der Aufzeichnungsfläche bringt, auf die die Tinte aufgebracht wird, um den in der Lackplatte (63) gehaltenen Lack auf die Aufzeichnungsfläche zu übertragen und aufzubringen, und eine Aniloxwalze (64) enthält, die den aus einer Kammer (65) der Lackplatte (63) zugeführten Lack überträgt; wobei eine Beschichtungserzeugungszeit für den Lack 9 Minuten oder mehr beträgt, und wobei die Beschichtungserzeugungszeit folgendermaßen bestimmt wird: Ermitteln einer Zeitspanne, bis auf dem Lack in einem Behälter eine Falte entsteht, wenn ein Kunststoffbehälter mit flachem Boden und einem Durchmesser von 60 mm, der 5 Gramm des Lacks enthält, auf einer Platte bei 80°C horizontal gehalten wird, und anschließend der Behälter unter einem Winkel von 45° in Bezug auf die Horizontale gekippt wird.

2. Druckvorrichtung nach Anspruch 1,
bei der der Lack ein Antitrocknungsmittel enthält.

3. Druckvorrichtung nach Anspruch 1 oder 2,
bei der die Beschichtungserzeugungszeit des Lacks 12 Minuten oder mehr beträgt.

4. Druckvorrichtung nach einem der Ansprüche 1 bis 3,
bei der die Verarbeitungsflüssigkeit-Zugabeeinheit die Verarbeitungsflüssigkeit zugibt durch eine Zugabemenge von 2,0 Gramm pro Quadratmeter oder weniger.

5. Druckvorrichtung nach einem der Ansprüche 1 bis 4,
bei der die Lackbeschichtungseinheit den Lack aufbringt durch eine Zugabemenge von 3,5 Gramm pro Quadratmeter oder mehr.

6. Druckvorrichtung nach einem der Ansprüche 1 bis 5,
bei der die Bildaufzeichnungseinheit eine klare Tinte ohne Färbungsmaterialkomponente in einer Zone aufbringt, die verschieden ist von einer Zone, in der eine gefärbte Tinte, die eine Färbungsmaterialkomponente enthält, aufgebracht wird.

7. Druckvorrichtung nach Anspruch 6,
bei der die Mengen an Aggregationskomponenten in der gefärbten Tinte und der klaren Tinte einander gleichen.

8. Druckvorrichtung nach einem der Ansprüche 1 bis 7,
bei der die Lackbeschichtungseinheit eine Reinigungseinheit enthält, die in Berührung mit der Lackplatte zum Reinigen der Lackplatte an einer Stelle gelangt, die zwischen einer Stelle liegt, wo der Lack in der Lackplatte auf die Aufzeichnungsfläche übertragen und aufgebracht wird, und einer Stelle, an der neuer Lack aus der Aniloxwalze auf die Lackplatte übertragen wird.

9. Druckvorrichtung nach Anspruch 1, umfassend:
eine Aufzeichnungsmedium-Informationseingabeeinheit, die Information über das Aufzeichnungsmedium eingibt;
eine Verarbeitungsflüssigkeits-Informations-Eingabeeinheit, die Information über die Verarbeitungsflüssigkeit eingibt;
eine Kontaktwinkel-Gewinnungseinheit, die einen Kontaktwinkel zwischen der Verarbeitungsflüssigkeit und dem Aufzeichnungsträger ermittelt;
eine Speichereinheit (104), die eine Mehrzahl von Lacken und Beschichtungserzeugungszeiten der mehreren Lacke in Relation zueinander speichert, und
eine Ausgabeeinheit, die Information des Lacks mit einer Lackerzeugungszeit von 9 Minuten oder mehr dann ausgibt, wenn der gewonnene Kontaktwinkel gleich oder größer ist als 70°.

10. Druckvorrichtung nach Anspruch 1, umfassend.
eine Verarbeitungsflüssigkeits-Informationseingabeeinheit, die Information über die Verarbeitungsflüssigkeit eingibt;
eine Lackinformations-Eingabeeinheit, die Information über den Lack eingibt;
eine Speichereinheit (104), die Kontaktwinkel von Kombinationen der mehreren Aufzeichnungsmedien und der mehreren Verarbeitungsflüssigkeiten speichert; und
eine Ausgabeeinheit, die Information des Aufzeichnungsträgers mit dem Kontaktwinkel bezüglich der Verarbeitungsflüssigkeit von weniger als 70° dann ausgibt, wenn die gewonnene Beschichtungserzeugungszeit kürzer als 9 Minuten beträgt.

11. Druckverfahren, umfassend:
einen Verarbeitungsflüssigkeits-Zugabeschritt des Zugebens einer Verarbeitungsflüssigkeit, die Säure als Aggregationskomponente, die Komponenten in einer Tinte aggregiert, und einen Kontaktwinkel bezüglich einer Aufzeichnungsfläche eines Aufzeichnungsträgers von gleich oder mehr als 70° besitzt, auf die Aufzeichnungsfläche;
einen Bildaufzeichnungsschritt des Aufbringens einer Tinte auf die Aufzeichnungsfläche, auf die die Verarbeitungsflüssigkeit aufgegeben wurde, aus einem Tintenstrahlkopf, um ein Bild aufzuzeichnen; und
einen Lackbeschichtungsschritt des Aufbringens eines Lacks auf die Aufzeichnungsfläche durch eine Lackbeschichtungswalze, die eine einen Lack in einer ausgewählten Zone haltende Lackplatte in Berührung mit der Aufzeichnungsfläche bringt, auf der die Tinte aufgebracht wird, um den in der Lackplatte gehaltenen Lack auf die Aufzeichnungsfläche zu übertragen und aufzubringen, und mittels einer Aniloxwalze, die den von einer Kammer zu der Lackplatte gelieferten Lack auf die Lackplatte überträgt, die an einer Umfangsfläche der Lackbeschichtungswalze befestigt ist,
Einstellen einer Beschichtungserzeugungszeit des Lacks auf 9 Minuten oder mehr, wobei es sich bei der Beschichtungserzeugungszeit um eine Zeitspanne handelt, bis auf dem Lack in dem Behälter eine Falte entsteht, wenn ein Kunststoffbehälter mit flachem Boden und einem Durchmesser von 60 mm, der 5 Gramm des Lacks enthält, auf einer Platte bei 80°C horizontal platziert wird, und anschließend der Behälter in Bezug auf die Horizontale unter einem Winkel von 45° gekippt wird.

12. Lackinformations-Ausgabeverfahren zum Ausgeben von Information über einen Lack, der in einer Druckvorrichtung zu verwenden ist, die eine Verarbeitungsflüssigkeits-Zugabeeinheit enthält, die eine Verarbeitungsflüssigkeit, welche Säure als Aggregationskomponente enthält, die Komponenten in einer Tinte aggregiert, auf eine Aufzeichnungsfläche eines Aufzeichnungsträgers aufbringt, eine Bildaufzeichnungseinheit enthält, die eine Tinte auf die Aufzeichnungsfläche aufbringt, auf die die Verarbeitungsflüssigkeit aufgebracht wurde, aus einem Tintenstrahlkopf, um ein Bild aufzuzeichnen, und eine Lackbeschichtungseinheit enthält, die eine Lackbeschichtungswalze enthält, die eine Lackplatte, die in einer ausgewählten Zone einen Lack hält, in Berührung mit der Aufzeichnungsfläche bringt, auf die die Tinte aufgebracht wird, um den in der Lackplatte gehaltenen Lack auf die Aufzeichnungsfläche zu übertragen und aufzubringen, und eine Aniloxwalze enthält, welche den aus einer Kammer gelieferten Lack auf die Lackplatte überträgt, welche an einer Umfangsfläche der Lackbeschichtungswalze befestigt ist, umfassend:
einen Aufzeichnungsmedium-Informationseingabeschritt des Eingebens von Information über einen Aufzeichnungsträger, der in der Druckvorrichtung zu verwenden ist;
einen Verarbeitungsflüssigkeit-Informationseingabeschritt des Eingebens von Information über eine Verarbeitungsflüssigkeit zur Verwendung in der Druckvorrichtung;
einen Kontaktwinkel-Gewinnungsschritt des Gewinnens eines Kontaktwinkels zwischen der zu verwendenden Verarbeitungsflüssigkeit und dem zu verwendenden Aufzeichnungsträger; und
einen Ausgabeschritt des Ausgeben von Information eines Lacks mit einer Beschichtungserzeugungszeit von 9 Minuten oder mehr unter der Annahme, dass eine Zeitspanne, bis eine Falte auf dem Lack in dem Behälter dann erzeugt wird, wenn ein Kunststoffbehälter mit flachem Boden und einem Durchmesser von 60 mm, der 5 Gramm des Lacks enthält, bei 80°C auf einer Platte horizontal platziert ist und anschließend der Behälter in Bezug auf die Horizontale unter einem Winkel von 45° gekippt wird, eine Beschichtungserzeugungszeit bildet.

13. Aufzeichnungsmedium-Informationsausgabeverfahren zum Ausgeben von Information über einen Aufzeichnungsträger zur Verwendung in einer Druckvorrichtung, die eine Verarbeitungsflüssigkeits-Zugabeeinheit enthält, die eine Verarbeitungsflüssigkeit, welche Säure als Aggregationskomponente enthält, die Komponenten in einer Tinte aggregiert, auf eine Aufzeichnungsfläche eines Aufzeichnungsträgers aufbringt, eine Bildaufzeichnungseinheit enthält, die eine Tinte auf die Aufzeichnungsfläche aufbringt, auf die die Verarbeitungsflüssigkeit aufgebracht wurde, aus einem Tintenstrahlkopf, um ein Bild aufzuzeichnen, und eine Lackbeschichtungseinheit enthält, die eine Lackbeschichtungswalze enthält, die eine Lackplatte, die in einer ausgewählten Zone einen Lack hält, in Berührung mit der Aufzeichnungsfläche bringt, auf die die Tinte aufgebracht wird, um den in der Lackplatte gehaltenen Lack auf die Aufzeichnungsfläche zu übertragen und aufzubringen, und eine Aniloxwalze enthält, welche den aus einer Kammer gelieferten Lack auf die Lackplatte überträgt, welche an einer Umfangsfläche der Lackbeschichtungswalze befestigt ist, umfassend:
einen Verarbeitungsflüssigkeit-Informationseingabeschritt des Eingebens von Information über eine Verarbeitungsflüssigkeit, die in der Druckvorrichtung zu verwenden ist;
einen Lackinformation-Eingabeschritt des Eingebens von Information über einen Lack, der in der Druckvorrichtung zu verwenden ist;
einen Beschichtungserzeugungszeit-Gewinnungsschritt des Gewinnens einer Beschichtungserzeugungszeit des eingegebenen Lacks unter der Annahme, dass eine Zeitspanne, bis eine Falte entsteht auf dem Lack in dem Behälter dann, wenn ein Kunststoffbehälter mit flachem Boden und einem Durchmesser von 60 mm, der 5 Gramm des Lacks enthält, auf einer Platte bei 80°C horizontal platziert ist, und anschließend der Behälter in Bezug auf die Horizontale unter einem Winkel von 45° gekippt wird, eine Beschichtungserzeugungszeit darstellt; und
einen Ausgabeschritt des Ausgebens von Information über den Aufzeichnungsträger mit einem Kontaktwinkel bezüglich einer zu verwendenden Verarbeitungsflüssigkeit von weniger als 70°, falls die erhaltene Beschichtungserzeugungszeit weniger als 9 Minuten beträgt.

## Revendications

1. Dispositif d'impression, comprenant :
une unité d'ajout de liquide de traitement (20) apte à ajouter un liquide de traitement contenant un acide comme composant agrégant, lequel réalise l'agrégation de composants dans une encre et présentant un angle de contact avec une surface d'enregistrement d'un support d'enregistrement supérieur ou égal à 70°, sur la surface d'enregistrement ;
une unité d'enregistrement d'image (40) apte à appliquer une encre sur la surface d'enregistrement, sur laquelle le liquide de traitement est ajouté, à partir d'une tête pour jet d'encre, afin d'enregistrer une image, et
une unité d'enduction de vernis (60), laquelle inclut un rouleau d'enduction de vernis (62) sur la surface périphérique extérieure sur laquelle est enroulée une plaque de vernis (63), et laquelle amène la plaque de vernis (63) contenant un vernis dans une région sélectionnée (A_{N}) en contact avec la surface d'enregistrement, sur laquelle l'encre est appliquée, afin de transférer et d'appliquer le vernis contenu dans la plaque de vernis (63) sur la surface d'enregistrement, et un rouleau anilox (64), lequel transfère le vernis alimenté à partir d'une chambre (65) vers la plaque de vernis (63) ; dans lequel un temps de formation de revêtement du vernis est supérieur ou égal à 9 minutes, et
dans lequel le temps de formation de revêtement est déterminé de la manière suivante :
obtention d'une période de temps jusqu'à la génération d'un pli sur le vernis dans un récipient dans un cas où un récipient à fond plat en plastique présentant un diamètre de 60 millimètres contenant 5 grammes du vernis est placé horizontalement sur une plaque à 80 °C, puis inclinaison du récipient suivant un angle de 45 ° par rapport à l'horizontale.

2. Dispositif d'impression selon la revendication 1,
dans lequel le vernis inclut un agent anti-siccatif.

3. Dispositif d'impression selon la revendication 1 ou 2,
dans lequel le temps de formation de revêtement du vernis est supérieur ou égal à 12 minutes.

4. Dispositif d'impression selon l'une quelconque des revendications 1 à 3,
dans lequel l'unité d'ajout de liquide de traitement ajoute le liquide de traitement à raison d'une quantité d'ajout inférieure ou égale à 2,0 grammes par mètre carré.

5. Dispositif d'impression selon l'une quelconque des revendications 1 à 4,
dans lequel l'unité d'enduction de vernis applique le vernis à raison d'une quantité d'ajout supérieure ou égale à 3,5 grammes par mètre carré.

6. Dispositif d'impression selon l'une quelconque des revendications 1 à 5,
dans lequel l'unité d'enregistrement d'image applique une encre transparente ne contenant pas de composant de matière colorante dans une région autre qu'une région sur laquelle une encre colorée contenant un composant de matière colorante est appliquée.

7. Dispositif d'impression selon la revendication 6,
dans lequel les quantités de composants agrégants dans l'encre colorée et l'encre transparente sont égales entre elles.

8. Dispositif d'impression selon l'une quelconque des revendications 1 à 7,
dans lequel l'unité d'enduction de vernis inclut une unité de nettoyage, laquelle vient en contact avec la plaque de vernis afin de nettoyer la plaque de vernis, dans une position entre une position où le vernis contenu dans la plaque de vernis est transféré et appliqué sur la surface d'enregistrement et une position où un nouveau vernis est transféré sur la plaque de vernis à partir du rouleau anilox.

9. Dispositif d'impression selon la revendication 1, comprenant :
une unité d'entrée d'informations de support d'enregistrement, laquelle entre des informations du support d'enregistrement ;
une unité d'entrée d'informations de liquide de traitement, laquelle entre des informations du liquide de traitement ;
une unité d'obtention d'angle de contact, laquelle obtient un angle de contact entre le liquide de traitement et le support d'enregistrement ;
une unité de stockage (104), laquelle stocke une pluralité de vernis et de temps de formation de revêtement de la pluralité de vernis les uns par rapport aux autres, et
une unité de sortie, laquelle produit des informations du vernis présentant le temps de formation de revêtement supérieur ou égal à 9 minutes, dans un cas où l'angle de contact obtenu est supérieur ou égal à 70 °.

10. Dispositif d'impression selon la revendication 1, comprenant :
une unité d'entrée d'informations de liquide de traitement, laquelle entre des informations du liquide de traitement ;
une unité d'entrée d'informations de vernis, laquelle entre des informations du vernis ;
une unité de stockage (104), laquelle stocke respectivement des angles de contact de combinaisons entre la pluralité de supports d'enregistrement et la pluralité de liquides de traitement, et
une unité de sortie, laquelle produit des informations du support d'enregistrement présentant l'angle de contact avec le liquide de traitement inférieur à 70 °, dans un cas où le temps de formation de revêtement est inférieur à 9 minutes.

11. Procédé d'impression, comprenant les étapes suivantes :
une étape d'ajout de liquide de traitement pour à ajouter un liquide de traitement contenant un acide comme composant agrégant, lequel réalise l'agrégation de composants dans une encre et présentant un angle de contact avec une surface d'enregistrement d'un support d'enregistrement supérieur ou égal à 70°, sur la surface d'enregistrement ;
une étape d'enregistrement d'image pour appliquer une encre sur la surface d'enregistrement, sur laquelle le liquide de traitement est ajouté, à partir d'une tête pour jet d'encre, afin d'enregistrer une image, et
une étape d'enduction de vernis pour appliquer un vernis sur la surface d'enregistrement par un rouleau d'enduction de vernis, laquelle amène une plaque de vernis contenant un vernis dans une région sélectionnée en contact avec la surface d'enregistrement, sur laquelle l'encre est appliquée, afin de transférer et d'appliquer le vernis contenu dans la plaque de vernis sur la surface d'enregistrement, et un rouleau anilox, lequel transfère le vernis alimenté à partir d'une chambre vers la plaque de vernis, la plaque de vernis étant fixée sur une surface périphérique du rouleau d'enduction de vernis, et pour régler un temps de formation de revêtement du vernis sur un temps supérieur ou égal à 9 minutes, le temps de formation de revêtement étant une période de temps allant jusqu'à la génération d'un pli sur le vernis dans le récipient dans un cas où un récipient à fond plat en plastique présentant un diamètre de 60 millimètres contenant 5 grammes du vernis est placé horizontalement sur une plaque à 80 °C, le récipient étant ensuite incliné suivant un angle de 45 ° par rapport à l'horizontale.

12. Procédé de production d'informations de vernis destiné à produire des informations d'un vernis à utiliser dans un dispositif d'impression incluant une unité d'ajout de liquide de traitement, laquelle ajoute un liquide de traitement contenant un acide comme composant agrégant, lequel réalise l'agrégation de composants dans une encre, sur une surface d'enregistrement d'un support d'enregistrement, une unité d'enregistrement d'image, laquelle applique une encre sur la surface d'enregistrement, sur laquelle le liquide de traitement est ajouté, à partir d'une tête pour jet d'encre, afin d'enregistrer une image, et une unité d'enduction de vernis, laquelle inclut un rouleau d'enduction de vernis (62), laquelle amène une plaque de vernis contenant un vernis dans une région sélectionnée en contact avec la surface d'enregistrement, sur laquelle l'encre est appliquée, afin de transférer et d'appliquer le vernis contenu dans la plaque de vernis vers la surface d'enregistrement, et un rouleau anilox, lequel transfère le vernis alimenté à partir d'une chambre vers la plaque de vernis, la plaque de vernis étant fixée sur une surface périphérique du rouleau d'enduction de vernis, le procédé comprenant les étapes suivantes :
une étape d'entrée d'informations de support d'enregistrement, pour entrer des informations d'un support d'enregistrement à utiliser dans le dispositif d'impression ;
une étape d'entrée d'informations de liquide de traitement pour entrer des informations d'un liquide de traitement à utiliser dans le dispositif d'impression ;
une étape d'obtention d'angle de contact pour obtenir un angle de contact entre le liquide de traitement à utiliser et le support d'enregistrement à utiliser, et
une étape de sortie pour produire des informations d'un vernis présentant un temps de formation de revêtement supérieur ou égal à 9 minutes, en supposant qu'une période de temps allant jusqu'à la génération d'un pli sur le vernis dans un récipient, dans un cas où un récipient à fond plat en plastique présentant un diamètre de 60 millimètres contenant 5 grammes du vernis est placé horizontalement sur une plaque à 80 °C, suivie de l'inclinaison du récipient suivant un angle de 45 ° par rapport à l'horizontale, est un temps de formation de revêtement.

13. Procédé de sortie d'informations de support d'enregistrement pour produire des informations d'un support d'enregistrement à utiliser dans un dispositif d'impression incluant une unité d'ajout de liquide de traitement, laquelle ajoute un liquide de traitement contenant un acide comme composant agrégant, lequel réalise l'agrégation de composants dans une encre sur une surface d'enregistrement d'un support d'enregistrement, une unité d'enregistrement d'image, laquelle applique une encre sur la surface d'enregistrement, sur laquelle le liquide de traitement est ajouté, à partir d'une tête pour jet d'encre afin d'enregistrer une image, et une unité d'enduction de vernis, laquelle inclut un rouleau d'enduction de vernis, laquelle amène une plaque de vernis contenant un vernis dans une région sélectionnée en contact avec la surface d'enregistrement, sur laquelle l'encre est appliquée, afin de transférer et d'appliquer le vernis contenu dans la plaque de vernis sur la surface d'enregistrement, et un rouleau anilox, lequel transfère le vernis alimenté à partir d'une chambre vers la plaque de vernis, la plaque de vernis étant fixée sur une surface périphérique du rouleau d'enduction de vernis, le procédé comprenant les étapes suivantes :
une étape d'entrée d'informations de liquide de traitement pour entrer des informations d'un liquide de traitement à utiliser dans le dispositif d'impression ;
une étape d'entrée d'informations de vernis pour entrer des informations d'un vernis à utiliser dans le dispositif d'impression ;
une étape d'obtention de temps de formation de revêtement pour obtenir un temps de formation de revêtement du vernis d'entrée, en supposant qu'une période de temps allant jusqu'à la génération d'un pli sur le vernis dans le récipient, dans un cas où un récipient à fond plat en plastique présentant un diamètre de 60 millimètres contenant 5 grammes du vernis est placé horizontalement sur une plaque à 80 °C, suivie de l'inclinaison du récipient suivant un angle de 45 ° par rapport à l'horizontale, est un temps de formation de revêtement, et
une étape de sortie pour sortir des informations du support d'enregistrement présentant un angle de contact avec un liquide de traitement à utiliser inférieur à 70 °, dans un cas où le temps de formation de revêtement obtenu est inférieur à 9 minutes.
